(19) Europäisches Patentamt / European Patent Office / Office européen des brevets

(11) **EP 3 634 746 B1**

(12) **EUROPEAN PATENT SPECIFICATION**

(45) Date of publication and mention
of the grant of the patent:
**20.04.2022 Bulletin 2022/16**

(21) Application number: **18725586.4**

(22) Date of filing: **08.05.2018**

(51) International Patent Classification (IPC):
*B32B 27/16* (2006.01)    *B32B 27/20* (2006.01)
*B32B 27/36* (2006.01)    *B32B 7/10* (2006.01)

(52) Cooperative Patent Classification (CPC):
**B32B 27/16; B32B 7/10; B32B 27/20; B32B 27/36;
B32B 27/365;** B32B 2250/02; B32B 2250/03;
B32B 2250/24; B32B 2250/244; B32B 2255/10;
B32B 2255/20; B32B 2255/26; B32B 2255/28;
B32B 2264/102; B32B 2270/00;      (Cont.)

(86) International application number:
**PCT/GB2018/051222**

(87) International publication number:
**WO 2018/206927 (15.11.2018 Gazette 2018/46)**

(54) **MULTI-LAYER FILM ASSEMBLY SUITABLE FOR USE IN A MULTI-LAYER CARD**

ZUR VERWENDUNG IN EINER MEHRSCHICHTIGEN KARTE GEEIGNETE, MEHRSCHICHTIGE FOLIENANORDNUNG

ENSEMBLE FILM MULTICOUCHE APPROPRIÉ POUR UNE UTILISATION DANS UNE CARTE MULTICOUCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.05.2017 GB 201707361**

(43) Date of publication of application:
**15.04.2020 Bulletin 2020/16**

(73) Proprietor: **DUPONT TEIJIN FILMS U.S. LIMITED
PARTNERSHIP
Wilmington, Delaware 19805 (US)**

(72) Inventors:
• **ASHBY, Shane
  Wilton
  Middlesbrough TS90 8JF (GB)**
• **PARNHAM, Emily
  Wilton
  Middlesbrough TS90 8JF (GB)**
• **CHILD, Felicity
  Wilton
  Middlesbrough TS90 8JF (GB)**
• **HODGSON, Mark
  Wilton
  Middlesbrough TS90 8JF (GB)**

(74) Representative: **Carpmaels & Ransford LLP
One Southampton Row
London WC1B 5HA (GB)**

(56) References cited:
**WO-A1-01/53391      WO-A1-2016/005746
US-B2- 7 232 602      US-B2- 7 785 680**

EP 3 634 746 B1

**(Cont. next page)**

(52) Cooperative Patent Classification (CPC): (Cont.)
B32B 2307/31; B32B 2307/40; B32B 2307/402;
B32B 2307/4023; B32B 2307/4026; B32B 2307/41;
B32B 2307/412; B32B 2307/702; B32B 2307/704;
B32B 2307/75; B32B 2425/00

**Description**

This invention relates to a multi-layer film suitable for use in a multi-layer card such as an identification, credit or magnetic card, and further relates to the multi-layer card itself.

Polyester films, such as polyethylene terephthalate (PET) films, have been widely used in the production of an identification card or magnetic card, such as a credit card, and including pre-paid cards such as travel or telephone cards, and "smart" cards such as cards capable of storing information about financial transactions. Such cards are usually constructed of multiple sheets of the same or different polymeric materials, including polyesters (such as PET), polycarbonate, polyolefin, polyvinyl chloride (PVC), ABS (acrylonitrile butadiene styrene) and paper. The cards are typically opaque and contain at least one opaque layer.

US patents 7,785,680 and 7,232,602 disclose multi-layer cards containing a multi-layer film which comprises a polyester base layer, a copolyester heat-sealable layer disposed on the first side of the base layer, and a printable layer (for instance, an ink-receptive layer) disposed on the second side of the base layer. Preferably, the copolyester of the heat-sealable layer is derived from terephthalic acid, isophthalic acid (IPA) and ethylene glycol (hereinafter referred to as PET-IPA copolyester). The polyester base layer comprises a copolyesterether in order to reduce the tendency of the card to delaminate in use. In conventional cards, the multi-layer film is adhered to one or both sides (typically both sides) of a polymeric core layer (also referred to as an "inlay") via said copolyester heat-sealable layer, i.e. so that the engraveable/printable layer is exposed or outward-facing. The inlay is typically PVC, but may also be, for example, polycarbonate, polyolefin or ABS. An adhesive is typically interposed between the inlay and the copolyester heat-sealable layer of the multi-layer film in order to achieve the required adhesion.

In the use of the cards described in US patents 7,785,680 and 7,232,602, information is imparted to the printable layer, by a suitable printing technique. Typically, the cards are then generated after printing by punching the card shape from a printed sheet. The cards are finished with a protective cover layer (also referred to as an "overlay") to provide protection, including security, to the printable layer and the information contained thereon. The overlay may also function as an engraveable layer, particularly a laser-engraveable layer, which is capable of carrying additional information. Laser-engraving techniques and equipment are well-known in the art. The overlay is typically PVC, but may also be, for example, polycarbonate, polyolefin or ABS. An adhesive is typically interposed between the overlay and the multi-layer film, and this is usually achieved by virtue of an adhesive coating on one surface of the overlay, in order to achieve the required adhesion.

Conventional cards of the sort described above can be susceptible to delamination, which is problematic in itself and also reduces the durability, security and tamper-resistance of the card.

An object of the present invention is to improve the delamination resistance of the card and the multi-layer films which constitute the card, and hence improve durability, security and tamper-resistance of the card. Furthermore, the present inventors have also observed that the plane of failure during delamination of conventional cards is typically within the polyester base layer of the multi-layer film(s) present in the card. An object of the present invention is to reduce or eliminate cohesive failure in the polyester base layer, i.e. to increase the cohesive strength of the polyester base layer, thereby increasing the delamination resistance of the multi-layer film and card. A further object of the present invention is to improve the delamination resistance of the card while maintaining excellent optical properties such as high opacity, high whiteness and low yellowness, i.e. without significant detriment to the optical properties of the card.

According to a first aspect of the present inventior defined by claim 1 , there is provided a multi-layer card comprising a polymeric inlay layer having a first surface and a second surface, further comprising a first multi-layer film which is disposed on the first surface of the polymeric inlay layer, and further comprising a first polymeric overlay layer which is disposed on said first multi-layer film, such that the layer order is polymeric inlay layer, first multi-layer film and first polymeric overlay layer, wherein the multi-layer film comprises:(i) a polyester base layer (B) having a first and second surface wherein the polyester of the base layer is a crystallisable polyester; and(ii) a heat-sealable copolyester layer (A) disposed on one or both surfaces of said polyester base layer (B), wherein the polyester base layer (B) comprises titanium dioxide particles in an amount of from about 1 to about 30 wt% by total weight of the base layer, wherein said particles are coated with an organic coating.

According to claim 23, the present invention provides a multi-layer film comprising:(i) a polyester base layer (B) having a first and second surface wherein the polyester of the base layer is a crystallisable polyester; and(ii) a heat-sealable copolyester layer (A) disposed on one or both surfaces of said polyester base layer (B), wherein the polyester base layer (B) comprises titanium dioxide particles in an amount of from about 1 to about 30 wt% by total weight of the base layer, wherein said particles are coated with an organic coating, wherein said organic coating is an organophosphorus compound. According to claim 26, the present invention provides a multi-layer film comprising:(i) a polyester base layer (B) having a first and second surface wherein the polyester of the base layer is a crystallisable polyester; and(ii) a heat-sealable copolyester layer (A) disposed on one or both surfaces of said polyester base layer (B), wherein the polyester base layer (B) comprises titanium dioxide particles in an amount of from about 1 to about 30 wt% by total weight of the base layer, wherein said particles are coated with an organic coating, wherein said organic coating is a polymeric organic coating and wherein the polymeric backbone of said polymeric coating does not contain silicon atoms.

The present inventors have unexpectedly found that the multi-layer films and cards of the present invention exhibit superior delamination resistance, and hence improved security and tamper-resistance, while simultaneously exhibiting excellent optical properties. The multi-layer films exhibit superior cohesive strength within the polyester base layer, thereby improving delamination resistance and hence the durability, security and tamper-resistance of the multi-layer card.

The multi-layer films are self-supporting films or sheets by which is meant films or sheets capable of independent existence in the absence of a supporting base.

The polyester base layer (B) is preferably uniaxially or biaxially oriented, preferably biaxially oriented. As discussed below, orientation is effected by stretching the film in one or two direction(s), The stretching step(s) is/are preferably conducted on the multi-layer films comprising said base layer and said copolyester layers.

The polyesters which make up the multi-layer films are typically synthetic linear polyesters. The polyesters are suitably thermoplastic polyesters. Suitable polyesters are obtainable by condensing one or more dicarboxylic acid(s) or their lower alkyl (up to 6 carbon atoms) diesters with one or more diols. The dicarboxylic acid component contains at least one aromatic dicarboxylic acid, which is preferably terephthalic acid (TA), isophthalic acid (IPA), phthalic acid, 1,4-, 2,5-, 2,6- or 2,7-naphthalenedicarboxylic acid, and is preferably terephthalic acid or 2,6-naphthalenedicarboxylic acid, and preferably terephthalic acid. The polyester may also contain one or more residues derived from other dicarboxylic acids such as 4,4'-diphenyldicarboxylic acid, hexahydro-terephthalic acid, 1,10-decanedicarboxylic acid, and aliphatic dicarboxylic acids including those of the general formula $C_nH_{2n})(COOH)_2$ wherein n is 2 to 8, such as succinic acid, glutaric acid sebacic acid, adipic acid, azelaic acid, suberic acid or pimelic acid. The diols are preferably selected from aliphatic and cycloaliphatic glycols. Preferably, the aliphatic glycol has from 2 to 4 carbon atoms and is suitably a straight chain diol, such as ethylene glycol (EG), 1,3-propanediol or 1,4-butanediol. Preferably the cycloaliphatic glycol contains a single ring, preferably a 6-membered ring, and is preferably 1,4-cyclohexanedimethanol (CHDM). Preferably the glycol is selected from ethylene glycol (EG) and 1,4~cyclohexanedimethanol. The film-forming polyester resin is the major component of a polyester layer of the multi-layer film, and makes up at least 50% by weight of the total weight of a given layer, preferably at least 65%, typically at least 80%, more typically at least 85% by weight of the total weight of a given layer.

The polyester of the polyester base layer (B) is a crystallisable polyester. The polyester of the base layer (B) is preferably derived from the carboxylic acids (preferably the aromatic dicarboxylic acids) and glycols described above. Preferably the polyester of the base layer (B) contains only one dicarboxylic acid, preferably an aromatic dicarboxylic acid, preferably terephthalic acid or 2,6-naphthalenedicarboxylic acid, and preferably terephthalic acid. Preferably the polyester of the base layer (B) contains only one glycol, preferably an aliphatic glycol, preferably ethylene glycol. Preferably the polyester contains one aromatic dicarboxylic acid and one aliphatic glycol. Polyethylene terephthalate (PET) or polyethylene 2,6-naphthalate (PEN), particularly PET, is the preferred polyester of the base layer (B). The polyester of the base layer (B) may optionally contain relatively minor amounts of one or more residues derived from the other dicarboxylic acids and/or diols described above, and where such minor amounts are present then the total amount of said other dicarboxylic acid(s) is preferably less than 10 mol%, preferably less than 5 mol%, preferably less than 1 mol% of the total dicarboxylic acid fraction of the polyester of the base layer and/or the total amount of said other diol(s) is preferably less than 15 mol%, preferably less than 10 mol%, preferably less than 5 mol% of the total diol fraction of the polyester of the base layer. The aforementioned polyester is the major component of the base layer (B) and makes up at least 50% by weight of the total weight of the layer, preferably at least 65%, typically at least 70% or at least 80% by weight of the total weight of the layer.

The intrinsic viscosity of the polyester from which the base layer (B) is manufactured is preferably at least about 0.60, preferably at least about 0.61, preferably no more than about 0.70.

The base layer (B) preferably comprises a copolyesterether. The copolyesterether is preferably a block copolymer. The block copolyesterether predominantly comprises at least one polyester block (referred to herein as a "hard" segment), and at least one polyether block (referred to herein as a "soft" segment), as described in US-7,232,602. The ratio of hard:soft block in the copolyesterether is preferably in the range from 10-95 : 5-90, more preferably 25-55 : 45-75, and particularly 35-45 : 55-65 hard:soft, by weight % of the copolyesterether.

The hard polyester block of the copolyesterether is suitably formed by condensing one or more dicarboxylic acids, or ester derivatives or ester forming derivatives thereof, with one or more glycols. The dicarboxylic acid or derivative thereof may be aliphatic, cycloaliphatic or aromatic. Suitable aliphatic or cycloaliphatic dicarboxylic acids include 1,3- or 1,4-cyclohexane dicarboxylic, adipic, glutaric, succinic, carbonic, oxalic and azelaic acids. Aromatic dicarboxylic acids are preferred and include terephthalic, isophthalic, phthalic, bibenzoic and naphthalenedicarboxylic acids, and the dimethyl derivatives thereof. The glycol component may also be aliphatic, cycloaliphatic or aromatic. The glycol is preferably aliphatic or cycloaliphatic. Suitable glycols include ethylene glycol, 1,3-propanediol, 1,4-butanediol, neopentyl glycol, 1,6-hexanediol and 1,4-cyclohexane dimethanol. Terephthalic acid is a preferred aromatic dicarboxylic acid. Butylene glycol is a preferred glycol. The polyester block suitably predominantly comprises (and preferably consists of) at least one alkylene terephthalate, for example ethylene terephthalate, butylene terephthalate and/or hexylene terephthalate. Butylene terephthalate is particularly preferred. The molecular weight ($M_w$) of the polyester block is preferably less than 15,000, more preferably in the range from 440 to 10,000, particularly 660 to 3000, and especially 880 to 1500. Molecular weight determination may be conducted on a Hewlett-Packard 1050 Series HPLC system equipped with two GPC Ultrastyragel columns, $10^3$ and $10^4$ Å (5 μm mixed, 300 mm × 19 mm, Waters Millipore Corporation, Milford, MA, USA) and THF as mobile phase. The molecular weight is calculated by comparison with the retention times of polystyrene standards.

The soft polyether block of the copolyesterether is a polymeric glycol suitably formed from one or more glycols such as ethylene glycol, 1,2- or 1,3-propanediol, 1,4-butanediol, neopentyl glycol, 1,6-hexanediol and 1,4-cyclohexane dimethanol. The polyether block is preferably a poly(alkylene oxide) glycol, for example poly(ethylene oxide) glycol, poly(1,2- and 1,3-propylene oxide) glycol, poly(tetramethylene oxide) glycol, and random or block copolymers of ethylene oxide and propylene oxide. Poly(tetramethylene oxide) glycol is a preferred component of the polyether block. The molecular weight ($M_w$; measured as noted above) of the polyether block (preferably poly(tetramethylene oxide) glycol) is preferably in the range from 350 to 10,000, more preferably 600 to 5000, particularly 900 to 2000, and especially 1200 to 1800. In a particularly preferred embodiment, the copolyesterether comprises as the polyether block, a mixture of poly(tetramethylene oxide) glycol and polypropylene oxide) glycol, suitably in a ratio of from 1 to 20:1, preferably 5 to 15:1, and more preferably 8 to 12:1. The molecular weight ($M_w$) of the poly(propylene oxide) glycol is preferably in the range from 1000 to 5000, more preferably 2000 to 3000.

The copolyesterethers can be prepared by conventional polymerisation techniques. The copolyesterether is preferably dried prior to film formation and/or prior to incorporation in the composition of the base layer (B). The copolyesterether may be dried in isolation, or after mixing with one or more of the other components of the base layer, e.g. dried after mixing with any opacifying agent present in the base layer (which is discussed hereinbelow). The copolyesterether may be dried by conventional means, for example in a fluidised bed, or in an oven, at elevated temperature, under vacuum or by passing through an inert gas, e.g. nitrogen. The water content of the copolyesterether prior to extrusion of the film-forming base layer composition is preferably in the range from about 0 to about 800 ppm, preferably from about 25 to about 600 ppm, more preferably from about 50 to about 400 ppm, particularly from about 100 to about 300 ppm, and especially from about 150 to about 250 ppm.

The amount of copolyesterether present in the base layer (B) is preferably in the range from 0.2 to 30, preferably from 1 to 20, preferably from 1 to 15, preferably from 1 to 12, preferably from 1 to 10, preferably at least 3, particularly at least 5, and preferably at least 6 % by weight, relative to the total weight of the base layer (B).

The copolyesterether preferably has a flexural modulus (measured at 23°C. according to ASTM D790) of 200 MPa or less, and more preferably in the range from 50 to 100 MPa. In addition, preferred copolyesterethers have a Shore hardness (measured at 23°C. on the D scale according to DIN 53505) of 60 or less, particularly in the range from 35 to 45.

A heat-sealable copolyester layer (A) preferably comprises a copolyester selected from copolyesters derived from one or more diol(s) and one or more dicarboxylic acid(s), wherein the copolyester comprises at least three different types of monomeric repeating units. Preferably, the aliphatic diol(s) and dicarboxylic acid(s) are selected from the dicarboxylic acids and diols described above. The copolyester is preferably selected from (i) copolyesters comprising and preferably consisting of a first aromatic dicarboxylic acid, a second aromatic dicarboxylic acid and an aliphatic glycol; (ii) copolyesters comprising and preferably consisting of a first aromatic dicarboxylic acid, an aliphatic glycol and a cycloaliphatic glycol; and (iii) copolyesters comprising and preferably consisting of an aromatic dicarboxylic acid, an aliphatic dicarboxylic acid and an aliphatic glycol. The acids and glycols are preferably those described hereinabove. This copolyester is preferably derived from repeating units consisting of a first aromatic dicarboxylic acid, a second aromatic dicarboxylic acid and an aliphatic glycol; and is preferably derived from repeating units consisting of TA, IPA and EG. Where said copolyester consists of said acid(s) and diol(s), the copolyester may optionally contain relatively minor amounts of one or more different residues derived from the other dicarboxylic acids and/or diols described above, and where such minor amounts are present then the total amount of said other dicarboxylic acid(s) is preferably less than 10 mol%, preferably less than 5 mol%, preferably less than 1 mol% of the total dicarboxylic acid fraction of the copolyester and/or the total amount of said other diol(s) is preferably less than 10 mol%, preferably less than 5 mol%, preferably less than 1 mol% of the total diol fraction of the copolyester; but preferably the copolyester does not contain said one or more different residues. Where the copolyester is derived from repeating units consisting of first aromatic dicarboxylic acid, a second aromatic dicarboxylic acid and an aliphatic glycol (preferably TA, IPA and EG), the second aromatic dicarboxylic acid (preferably IPA) is preferably present in an amount of from about 5 to about 30 mol%, preferably from about 10 to about 25 mol% and preferably from about 15 to about 20 mol% of the acid fraction of the copolyester. The copolyester of the heat-sealable copolyester layer (A) is the major component of the layer, and makes up at least 50% by weight of the total weight of the layer, preferably at least 65%, preferably at least 80%, preferably at least 90%, more typically at least 95% by weight of the total weight of the layer.

The intrinsic viscosity (IV) of the copolyester from which the heat-sealable layer (A) is manufactured is preferably at least about 0.65, preferably at least about 0.68, preferably at least about 0.70, and preferably no more than about 0.85, preferably no more than about 0.80. If the IV is too high, this may give rise to poor film profile and difficulties in processing and manufacturing the film.

Where a heat-sealable copolyester layer is disposed on one or both surfaces of said polyester base layer (B), the copolyester layers are referred to herein as a first heat-sealable copolyester layer (A1), which is disposed on the first surface of the polyester base layer (B), and a second heat-sealable copolyester layer (A2), which is disposed on the second surface of the polyester base layer (B). In such embodiments, the copolyester of the first heat-sealable layer (A1) may be the same as or different to the copolyester of the second heat-sealable layer (A2) but preferably the same copolyester is used for the first and second heat-sealable layers (A1) and (A2). A symmetrical layer structure is preferred.

It is preferred that the multi-layer films comprises a first heat-sealable copolyester layer (A1) disposed on a first surface of said polyester base layer, and a second heat-sealable copolyester layer (A2) disposed on a second surface of said polyester base layer.

Formation of the polyesters described hereinabove is conveniently effected in a known manner by condensation or ester interchange, generally at temperatures up to about 295 °C. In a preferred embodiment, solid state polymerisation may be used to increase the intrinsic viscosity of crystallisable polyesters to the desired value, using conventional techniques well-known in the art, for instance using a fluidised bed such as a nitrogen fluidised bed or a vacuum fluidised bed using a rotary vacuum drier. In the following description of polymer and film manufacture, it will be understood that the term "polyester" includes "copolyester".

Formation of the multi-layer polyester films of the present invention may be effected by conventional techniques, including co-extrusion, lamination and coating techniques well-known in the art, and most preferably by co-extrusion. In general terms, the co-extrusion process comprises the steps of co-extruding the respective polyester compositions through independent orifices of a multi-orifice die, and thereafter uniting the still molten layers or, preferably, by single-channel co-extrusion in which molten streams of the respective polyesters are first united within a channel leading to a die manifold, and thereafter extruded together from the die orifice under conditions of streamline flow without intermixing thereby to produce a laminated film. Thus, the multi-layer film is preferably a co-extruded multi-layer film, i.e. the polyester base layer (B) and the heat-sealable copolyester layer(s) are co-extruded. The extrusion is generally carried out at a temperature within the range of from about 250 to about 300°C. and is followed by quenching the extrudate and orienting the quenched extrudate.

Orientation may be effected by any process known in the art for producing an oriented film, for example a tubular or flat film process. Biaxial orientation is effected by drawing in two mutually perpendicular directions in the plane of the film to achieve a satisfactory combination of mechanical and physical properties. In a tubular process, simultaneous biaxial orientation may be effected by extruding a thermoplastics polyester tube which is subsequently quenched, reheated and then expanded by internal gas pressure to induce transverse orientation, and withdrawn at a rate which will induce longitudinal orientation. In the preferred flat film process, the film-forming polyester is extruded through a slot die and rapidly quenched upon a chilled casting drum to ensure that the polyester is quenched to the amorphous state. Orientation is then effected by stretching the quenched extrudate in at least one direction at a temperature above the glass transition temperature of the polyester. Sequential orientation may be effected by stretching a flat, quenched extrudate firstly in one direction, usually the longitudinal direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus. Stretching is generally effected so that the dimension of the oriented film is from 2 to 5, more preferably 2.5 to 4.5 times its original dimension in the or each direction of stretching. Typically, stretching is effected at temperatures higher than the Tg of the polyester, preferably about 15 °C higher than the Tg. Greater draw ratios (for example, up to about 8 times) may be used if orientation in only one direction is required. It is not necessary to stretch equally in the machine and transverse directions although this is preferred if balanced properties are desired.

The stretched film may be, and preferably is, dimensionally stabilised by heat-setting under dimensional support at a temperature above the glass transition temperature of the polyester but below the melting temperature thereof, to induce the desired crystallisation of the polyester. During the heat-setting, a small amount of dimensional relaxation may be performed in the transverse direction (TD) by a procedure known as "toe-in". Toe-in can involve dimensional shrinkage of the order 2 to 4% but an analogous dimensional relaxation in the process or machine direction (MD) is difficult to achieve since low line tensions are required and film control and winding becomes problematic. The actual heat-set temperature and time will vary depending on the composition of the film and its desired final thermal shrinkage but should not be selected so as to substantially degrade the toughness properties of the film such as tear resistance. Within these constraints, a heat set temperature of about 180 to 245°C is generally desirable. After heat-setting the film is typically quenched rapidly in order induce the desired crystallinity of the polyester.

The film may be further stabilized through use of an in-line relaxation stage. Alternatively the relaxation treatment can be performed off-line. In this additional step, the film is heated at a temperature lower than that of the heat-setting stage, and with a much reduced MD and TD tension. The tension experienced by the film is a low tension and typically less than 5 kg/m, preferably less than 3.5 kg/m, more preferably in the range of from 1 to about 2.5 kg/m, and typically in the range of 1.5 to 2 kg/m of film width. For a relaxation process which controls the film speed, the reduction in film speed (and therefore the strain relaxation) is typically in the range 0 to 2.5%, preferably 0.5 to 2.0%. There is no increase in the transverse dimension of the film during the heat-stabilisation step. The temperature to be used for the heat stabilisation step can vary depending on the desired combination of properties from the final film, with a higher temperature giving better, i.e. lower, residual shrinkage properties. A temperature of 135 to 250 °C is generally desirable, preferably 150 to 230 °C, more preferably 170 to 200 °C. The duration of heating will depend on the temperature used but is typically in the range of 10 to 40 seconds, with a duration of 20 to 30 seconds being preferred. This heat stabilisation process can be carried out by a variety of methods, including flat and vertical configurations and either "off-line" as a separate process step or "in-line" as a continuation of the film manufacturing process. Film thus processed will exhibit a smaller thermal shrinkage than that produced in the absence of such post heat-setting relaxation.

The multi-layer films (and preferably the base layer (B)) are preferably opaque, by which is meant substantially impermeable to light, and preferably exhibits a Transmission Optical Density (TOD) of at least 0.3, preferably at least 0.4, preferably at least 0.5, preferably at least 0.6, preferably at least 0.8, preferably at least 1.0, and preferably in the range from 0.6 to 2.0, more preferably 0.8 to 2.0, particularly 1.0 to 2.0. It will be appreciated that optical density varies with thickness. A film having a thickness of 150 $\mu$m or greater preferably exhibits an optical density of at least 1.0 and a film having a thickness of 250 $\mu$m or more preferably exhibits an optical density of at least 1.7.

The multi-layer films (and preferably the base layer (B)) are preferably white and suitably exhibit a whiteness index, measured as herein described, of at least 60, preferably at least 85, preferably at least 90, preferably at least 92, preferably at least 94, typically no more than about 120, more preferably in a range from 90 to 105, particularly 95 to 105, and especially 97 to 103 units

The multi-layer films (and preferably the base layer (B)) preferably have the following CIE laboratory colour co-ordinate values for L*, a* and b*, measured as herein described. The L* value is suitably greater than 85.00, preferably greater than 90.00, preferably greater than 92.00, preferably greater than 93.00, and typically in the range from 90.00 to 100.00, more typically from 92.00 to 99.00, preferably from 92.00 to 97.00, more preferably from 92.00 to 95.00. The a* value is preferably in the range from -2.00 to -0.50, preferably from -1.60 to -0.50. The b* value is preferably in the range from -4.00 to -1.00.

The multi-layer films (and preferably the base layer (B)) preferably exhibit a yellowness index, measured as herein described, of less than or equal to 3, more preferably in the range from -10 to 0, particularly -8 to -3, and especially -7 to -5.

The multi-layer films are rendered opaque by incorporating an opacifying agent into one or more layers of the multi-layer film, and specifically into the polyester base layer (B). The heat-sealable layer(s) are typically not opaque; they typically do not contain opacifying agent in an amount effective to impart opacity. The opacifying agent suitably also functions as a whitening agent.

In the present invention, titanium dioxide particles coated with an organic coating function as the opacifying and whitening agent.

Preferably, the titanium dioxide is rutile titanium dioxide

The present inventors have observed that titanium dioxide particles (particularly rutile titanium dioxide particles) are a surprisingly advantageous opacifying agent, in that they provide surprisingly good properties, namely superior delamination resistance, improvement of the cohesive strength of the polyester base layer, and hence superior tamper-resistance. The cohesive strength of the film is polyester base layer may be measured as the delamination strength or peel strength as described herein, or may be measured as one or more of the mechanical properties of the multi-layer film.

The organic coating is preferably coated uniformly on said titanium dioxide particles. The organic coating is preferably coated discretely on said titanium dioxide particles. The organic material which coats the titanium dioxide particles is thus suitably a film-forming organic material.

Preferably, the organic coating does not comprise or is not derived from a silane.

The organic coating is not, and preferably does not comprise, a polysiloxane.

In a first preferred embodiment (referred to herein as **Embodiment A**) of the multi-layer card of the invention according to claim 1, and in the multi-layer film of the invention according to claim 23, the organic coating is an organophosphorus compound.

Preferably, the titanium dioxide particles are coated with an alkylphosphonic acid or an ester of an alkylphosphonic acid wherein the alkylphosphonic acid contains from 6 to 22 carbon atoms.

The alkylphosphonic acid or ester thereof is preferably represented by the formula P(R)(=O)(OR1)(OR2), wherein:

R is an alkyl group or a cycloalkyl group containing 6 to 22 carbon atoms; and
$R^1$ and $R^2$ are each hydrogen, an alkyl group, a cycloalkyl group, an aryl group or an aralkyl group.

When $R^1$ and $R^2$ are both hydrogen, the compound is an alkylphosphonic acid. When at least one of $R^1$ and $R^2$ is a hydrocarbyl group the formula represents an ester of an alkylphosphonic acid.

Preferably, R contains from 6 to 14 carbon atoms.

Preferably, R is a straight chain alkyl group. However, branched chain alkylphosphonic acids and their esters are also suitable.

In the case of the esters, $R^1$ and $R^2$ are preferably independently selected from an alkyl group, a cycloalkyl group, an aryl group or an aralkyl group containing up to 10 carbon atoms and more preferably up to 8 carbon atoms (i.e. the ester is an ester of an alcohol containing up to 10, and preferably up to 8 carbon atoms). $R^1$ and $R^2$ are preferably hydrocarbyl groups. Where $R^1$ and $R^2$ is aryl or aralkyl, the aryl group is preferably phenyl.

$R^1$ and $R^2$ can be different but are typically the same. Preferably $R^1$ and $R^2$ are hydrogen.

Particularly suitable esters include ethyl esters, butyl esters, octyl esters, cyclohexyl esters and phenyl esters.

Particularly preferred phosphorus compounds include n-octylphosphonic acid and its esters, n-decylphosphonic acid and its esters, 2-ethylhexylphosphonic acid and its esters and camphyl phosphonic acid and its esters.

Coated particles according to Embodiment A may be prepared using the processes taught in EP-0707051-A, the process of manufacture of which is incorporated herein by reference.

In a further preferred embodiment (referred to herein as **Embodiment B**) of the multi-layer card of the invention according to claim 1, and in the multi-layer film of the invention according to claim 26, the organic coating is a polymeric organic coating, wherein the polymeric backbone of said polymeric coating does not contain silicon atoms.

A polymeric organic coating is preferably derived from monomers containing carbon, hydrogen and oxygen atoms, and optionally further comprising nitrogen and/or phosphorus and/or sulphur atoms. Thus, it will be appreciated that the polymeric organic coating is preferably derived from monomers which do not contain silicon atoms. A polymeric organic coating is preferably not a polyolefin resin or preferably does not comprise a polyolefin resin.

The coated titanium dioxide particles coated by a polymeric organic coating are preferably obtained by dispersing titanium dioxide particles in water at a pH value higher than the isoelectric point of said titanium dioxide particles (and preferably at a pH above 7 and preferably at a pH of 9 to 11) in the presence of a dispersing agent comprising a polymeric polybasic acid or a salt thereof to produce particles having a modified isoelectric point; adjusting the pH of the dispersion to a value below 9 but above the modified isoelectric point of the particles; and polymerising in the presence of the dispersion so produced one or more ethylenically unsaturated monomer(s) so that said titanium dioxide particles are coated with polymerised monomer. Preferably the particles are manufactured in accordance with the disclosure of EP-0572128-A, the disclosure of which is incorporated herein, and particularly the disclosure of the process of manufacture of the coated particles is incorporated herein.

Without being bound by theory, it is believed that the coated titanium dioxide particles comprise a coherent inner coating formed from the dispersing agent and an outer coating formed from the polymerisation of one or more ethylenically unsaturated monomer(s) and/or the dispersing agent is incorporated into the polymeric coating during polymerisation of the ethylenically unsaturated monomer(s).

The polymeric polybasic acids are preferably selected from polysulphonic acids, polyphosphonic acids and polycarboxylic acids, and preferably from polycarboxylic acids, or salts thereof. When the polymeric polybasic acids are in salt form, the acids may be partially or fully neutralised. Suitable salts are the alkali metal salts or ammonium salts.

Suitable polysulphonic acids are preferably selected from lignosulphonates, petroleum sulphonates and poly(styrene sulphonates), including poly(sodium 4-styrene sulphonate).

Suitable polycarboxylic acids are preferably selected from polymaleic acids, polyacrylic acids, substituted acrylic acid polymers, acrylic copolymers, including copolymers of an acrylic acid with sulphonic acid derivatives, including 2-acrylamido and 2-methyl propane sulphonic acid. Other comonomers polymerisable with the acrylic acid or the substituted acrylic acid may contain a carboxyl group.

Preferably, the dispersing agents exhibit a molecular weight ($M_w$; measured as described hereinabove) of from about 1,000 to about 10,000. Preferably, the dispersing agents are substantially linear molecules.

Preferably, the amount of dispersing agent is from about 0.05 to about 5.0 wt%, preferably from about 0.1 to about 1.0 wt%, by weight of the titanium dioxide particle, i.e. the core, uncoated titanium dioxide particle prior to treatment with the dispersing agent and polymerisable coating monomer(s).

Preferably the polymeric organic coating comprises a polymer derived from one or more ethylenically unsaturated monomer(s). In other words, the polymeric organic coating comprises a polymer derived from the polymerisation of one or more ethylenically unsaturated monomer(s).

The ethylenically unsaturated monomer(s) are preferably polymerisable in aqueous solvents, preferably wherein the polymer produced is insoluble in water and optionally cross-linked by a cross-linking agent.

The ethylenically unsaturated monomer(s) are preferably selected from aliphatic and aromatic compounds containing a polymerisable unsaturated group, preferably wherein the polymerisable unsaturated group is selected from unsaturated carboxylic acids and unsaturated carboxylic acid esters.

The ethylenically unsaturated monomer(s) are preferably acidic monomers selected from acrylic acid, methacrylic acid, itaconic acid, maleic acid or its anhydride, fumaric acid and crotonic acid, and esters of said acidic monomers, including methyl acrylate, ethyl acrylate, methyl methacrylate, butyl acrylate and ethyl methacrylate. The ethylenically unsaturated monomer may also be selected from styrene, vinyl toluene, alpha methylstyrene, ethylene, vinyl acetate, vinyl chloride, acrylonitrile, and fluorinated monomers including fluorinated alkenes, fluorinated ethers, fluorinated acrylic and methacrylic acids and esters thereof and fluorinated heterocyclic compounds. Preferably, the ethylenically unsaturated monomer(s) are selected from unsaturated carboxylic acids and unsaturated carboxylic acid esters, preferably from methyl acrylate, ethyl acrylate, butyl acrylate, butyl methacrylate, vinyl acetate and vinyl isobutylether.

The polymeric organic coating may be cross-linked, preferably by virtue of the presence of one or more cross-linking agent(s), preferably wherein the cross-linking agent is selected from di- and poly-functional ethylenically unsaturated monomers, preferably from ethylene glycol dimethacrylate, ethylene glycol diacrylate, allyl methacrylate, allyl acrylate, 1,3-butanediol diacrylate, divinyl benzene and 1,3-butanediol dimethacrylate, preferably wherein said cross-linking agent in an amount of from about 1 wt% to about 20 wt%, preferably from about 1 wt% to about 10 wt%, based on the total weight of the ethylenically unsaturated monomer(s).

The organic coating is preferably present in an amount of from about 0.1 to about 200 wt%, preferably from about 0.1 to about 100 wt%, from about 0.5 to about 100 wt%, from about 2.0 to about 20 wt%, by weight of the titanium dioxide. Preferably, the volume ratio of the titanium dioxide particle particles to the organic coating is from 1:1 to 1:25 by volume, and preferably from 1:2 to 1:8.

The titanium dioxide preferably has a water content such that it exhibits a loss at 290°C of no greater than 1.0%, preferably no greater than 0.5%.

The organic coated titanium dioxide is preferably not hydrophobic. Preferably the organic coated titanium dioxide coating is hydrophilic.

The titanium dioxide particles preferably also carry an inorganic coating, typically a metal oxide, preferably selected from aluminium, silicon, zirconium and magnesium oxides, and preferably an alumina, zirconia and/or silica coating, preferably an alumina and/or silica coating or an alumina and/or zirconia coating, preferably an alumina coating. Where the titanium dioxide particles carry an organic coating and an inorganic coating, the organic coating is applied subsequently to the application of the inorganic coating onto the underlying titanium dioxide core.

The titanium dioxide particles are preferably not titanium dioxide particles coated with polyolefin resin, and particularly are not titanium dioxide particles coated with a coupling agent (such as an organic oxide of a tetravalent element, such as a titanate, silane or zirconate) and a polyolefin resin.

The amount of said titanium dioxide particles incorporated into the polyester base layer (B) is preferably in the range from about 5 to about 25, preferably from about 8 to about 20, preferably from about 10 to about 18, and preferably from about 10 to about 15% by weight, relative to the total weight of the polyester layer.

The individual or primary particles suitably have a volume-distributed median particle diameter (as defined below) in the range from 0.05 to 0.40 $\mu$m, preferably from 0.10 to 0.25 $\mu$m, preferably from 0.15 to 0.25 $\mu$m. Typically, the primary particles aggregate to form clusters or agglomerates comprising a plurality of particles. The aggregation process of the primary particles may take place during the actual synthesis of the filler and/or during the polyester and film making process. The aggregated particles preferably have a volume-distributed median particle diameter (equivalent spherical diameter corresponding to 50% of the volume of all the particles, read on the cumulative distribution curve relating volume % to the diameter of the particles, which is often referred to as the "D(v,0.5)" value), as determined by laser diffraction, in the range from 0.3 to 1.5 $\mu$m, more preferably 0.4 to 1.2 $\mu$m, and particularly 0.5 to 0.9 $\mu$m. Preferably at least 90%, more preferably at least 95% by volume of the particles are within the range of the volume-distributed median particle diameter $\pm$ 0.8 $\mu$m, and particularly $\pm$ 0.5 $\mu$m, and particularly $\pm$ 0.3 $\mu$m. Particle size of the filler particles may be measured by electron microscope, coulter counter, sedimentation analysis and static or dynamic light scattering. Techniques based on laser light diffraction (Fraunhofer diffraction) are preferred. A particularly preferred method utilises a Mastersizer (e.g. a 3000) available from Malvern. The median particle size may be determined by plotting a cumulative distribution curve representing the percentage of particle volume below chosen particle sizes and measuring the 50th percentile.

Optionally, the polyester base layer (B) may comprise one or more additional opacifying and/or whitening agent(s), and these are preferably be selected from one or more other particulate inorganic filler(s). Preferably, however, more than 50 wt%, preferably more than 60 wt%, preferably more than 70 wt%, preferably more than 80 wt%, preferably more than 90 wt%, preferably more than 95 wt%, preferably more than 98 wt%, preferably more than 99 wt% and preferably substantially all the opacifying and/or whitening agent(s) present in the polyester base layer (B) is said titanium dioxide particles coated with an organic coating. Other particulate inorganic fillers suitable for generating an opaque polyester layer include other metal or metalloid oxides (such as alumina, talc and silica (especially precipitated or diatomaceous silica and silica gels)), calcined china clay, and alkaline metal salts (such as the carbonates and sulphates of calcium and barium). Said other particulate inorganic fillers, where used in the present invention, are preferably of the non-voiding type.

Preferably, an opaque polyester layer has a degree of voiding in the range from 0 to 15, more preferably 0.01 to 10, particularly 0.05 to 5, and especially 0.1 to 1% by volume. Thus, an opaque polyester layer is preferably substantially free of voids. In other words, non-voiding opacifying agents are preferred. The degree of voiding can be determined, for example, by sectioning the film using scanning electron microscopy, and measuring the voids by image analysis.

The density of the polyester base layer (B) is preferably in the range from 1.2 to 1.5, more preferably 1.3 to 1.45, and particularly 1.35 to 1.4.

The multi-layer films optionally comprise an optical brightener, which is typically incorporated into the base layer (B). The optical brightener is preferably present in amounts in the range from 50 to 1500 ppm, more preferably 200 to 1000 ppm, and especially 400 to 600 ppm by weight, relative to the weight of the polyester of the layer. Suitable optical brighteners include those available commercially under the trade names "Uvitex" MES, "Uvitex" OB, "Leucopur" EGM and "Eastobrite" OB-1.

The multi-layer films optionally comprise a blue dye, which is typically incorporated into the base layer (B). A blue dye, where present, is typically present in amounts in the range from 100 to 3000 ppm, more preferably 200 to 2000 ppm, and especially 300 to 1000 ppm by weight, relative to the weight of the polyester of the layer.

The multi-layer films may further comprise other additives conventionally employed in the manufacture of polyester films. Thus, additives such as cross-linking agents, dyes, pigments, laser additives/markers, lubricants, hydrolysis stabilisers, antioxidants, UV absorbers, radical scavengers, thermal stabilisers, flame retardants and inhibitors, anti-blocking agents, surface active agents, slip aids, gloss improvers, prodegradents, viscosity modifiers and dispersion stabilisers may be incorporated as appropriate into the base layer (B) and/or a heat-sealable layer (A, A1 and/or A2).

It is preferred, however, that the films do not comprise an organic hydrolysis stabiliser, particularly wherein at least a portion of the titanium dioxide particles are coated with said organic coating.

It is also preferred that the films do not comprise an organic UV absorber, such as a benzophenone, benzotriazole, benzoxazinone or triazine.

A heat-sealable layer (A, A1 and/or A2) may also contain particulate filler. Suitable particulate fillers, where present, may be selected from the particulate fillers described above. The amount of particulate filler in a heat-sealable layer is preferably less than the amount of particulate filler in base layer (B). Preferably, a heat-sealable layer is free of particulate filler or contains particulate filler only in minor amounts. Thus, a heat-sealable layer may contain no more than 2.5% by weight, or no more than 2% by weight, or no more than 1% by weight, or no more than 0.6% by weight, or no more than about 0.3% by weight, based on the weight of the polyester in the layer. The particulate filler in a heat-sealable layer may be included for the purpose of improving handling of the film, for instance windability (i.e. the absence of blocking or sticking when the film is wound up into a roll). In a preferred embodiment, a heat-sealable layer is optically clear or translucent. As used herein, the term "optically clear" refers to a layer that provides a percentage of scattered transmitted light in the visible wavelength range of no more than 30%, preferably no more than 15% preferably no more than 10%, preferably no more than 6%, more preferably no more than 3.5% and particularly no more than 1.5%, and/or a total luminous transmission (TLT) for light in the visible region (400 nm to 700 nm) of at least 80%, preferably at least 85%, more preferably at least about 90%. Preferably, an optically clear layer fulfils both of these criteria. As used herein, the term "translucent" refers to a layer having a TLT of at least 50%, preferably at least 60%, and preferably at least 70%.

The components of a given polyester layer composition may be mixed together in conventional manner. For example, by mixing with the monomeric reactants from which the polyester is derived, or the components may be mixed with the polyester by tumble or dry blending or by compounding in an extruder, followed by cooling and, usually, comminution into granules or chips. Masterbatching technology may also be employed. Typically, the copolyesterether is fed separately to the extruder from which the polyester of the base layer (B) is extruded to form the base layer. Any optical brightener and/or blue dye may be included at any stage of the polyester or polyester film production, but is preferably added to the glycol, or alternatively to the polyester prior to the formation of the polyester film (for instance by injection during extrusion).

The intrinsic viscosity of the base layer (B) of the multi-layer films , and preferably also a heat-sealable copolyester layer (A, A1 and/or A2), is preferably at least 0.65, preferably at least 0.7, and in one embodiment in the range of from about 0.65 to about 0.75.

The thickness of the polyester base layer (B) is preferably in the range from 25 to 400 $\mu$m, more preferably at least 50 $\mu$m, more preferably at least 75 $\mu$m, more preferably at least 100 $\mu$m, more preferably 100 to 350 $\mu$m.

The thickness of a heat-sealable copolyester layer (A, A1 and/or A2) is preferably no more than 50 $\mu$m, and is preferably in the range of from about 0.5 to about 25 $\mu$m, preferably from about 3 to about 30 $\mu$m, preferably about 5 to about 25 $\mu$m, more preferably about 12 to about 18 $\mu$m. The thickness of polyester base layer (B) is preferably greater than the thickness of a heat-sealable copolyester layers (A, A1 and A2). The thickness of polyester base layer (B) is preferably greater than 50%, preferably at least 60%, more preferably at least 70% and preferably from about 75% to about 95% of the total thickness of the film.

A heat-sealable copolyester layer (A, A1, A2) may also function as an ink-receptive layer, which functions to improve the adhesion of inks, dyes and/or lacquers etc. An ink-receptive layer may carry pictorial information, such as an ordinary photograph, and/or written information such as typed script, a signature etc., as appropriate. Information may be imparted to the ink-receptive layer by means of traditional printing processes such as off-set, gravure, silk screen, and flexographic printing, or by writing by hand, or by thermal transfer printing (TTP), or by laser transfer printing (LTP), or by laser engraving.

In a first embodiment, the multi-layer films comprise a polyester base layer (B), a first heat-sealable copolyester layer (A1) disposed on a first surface of the polyester base layer and a second heat-sealable copolyester layer (A2) disposed on a second surface of the polyester base layer, as described hereinabove.

In a **second embodiment,** the multi-layer films comprise a polyester base layer (B), a heat-sealable copolyester layer (A) disposed on a first surface of the polyester base layer and an ink-receptive layer disposed on the second surface of the polyester base layer (wherein said ink-receptive layer is different from said heat-sealable copolyester layer (A)), preferably wherein the ink-receptive layer comprises an acrylic resin. In this embodiment, it is the second surface of the polyester base layer which is disposed towards the polymeric overlay layer in the multi-layer cards described hereinbelow, and it is the first surface of the polyester layer and the first heat-sealable layer (A1) which is disposed towards the polymeric inlay layer in the multi-layer cards described hereinbelow.

As used herein, the term "acrylic resin" refers to a resin which comprises at least one acrylic and/or methacrylic component.

The acrylic resin of the ink-receptive layer is suitably thermoset.

The acrylic resin of the ink-receptive layer preferably comprises at least one monomer derived from an ester of acrylic acid and/or an ester of methacrylic acid, and/or derivatives thereof. Preferably, the acrylic resin comprises greater than 50 mole %, preferably less than 98 mole %, more preferably in the range from 60 to 97 mole %, particularly 70 to 96 mole %, and especially 80 to 94 mole % of at least one monomer derived from an ester of acrylic acid and/or an ester of methacrylic acid, and/or derivatives thereof. A preferred acrylic resin comprises an alkyl ester of acrylic and/or methacrylic acid where the alkyl group contains up to ten carbon atoms such as methyl, ethyl, n-propyl, isopropyl, n-butyl, isobutyl, terbutyl, hexyl, 2-ethylhexyl, heptyl, and n-octyl. Preferably, the acrylic resin comprises an alkyl acrylate (preferably an ethyl acrylate and/or butyl acrylate) and an alkyl methacrylate (preferably methyl methacrylate), and preferably the acrylic resin comprises ethyl acrylate and methyl methacrylate. The acrylate monomer is preferably present in a proportion in the range from 20 to 80 mole% (preferably 30 to 65 mole %), and the methacrylate monomer is preferably present in a proportion in the range from 20 to 80 mole % (preferably from 20 to 60 mole %).

Other monomers which are suitable for use in the preparation of the acrylic resin, which are preferably copolymerised as optional additional monomers together with said esters of acrylic acid and/or methacrylic acid and/or derivatives thereof, include acrylonitrile, methacrylonitrile, halo-substituted acrylonitrile, halo-substituted methacrylonitrile, acrylamide, methacrylamide, N-methylol acrylamide, N-ethanol acrylamide, N-propanol acrylamide, N-methacrylamide, N-ethanol methacrylamide, N-methyl acrylamide, N-tertiary butyl acrylamide, hydroxyethyl methacrylate, glycidyl acrylate, glycidyl methacrylate, dimethylamino ethyl methacrylate, itaconic acid, itaconic anhydride and half esters of itaconic acid. Other optional monomers include vinyl esters such as vinyl acetate, vinyl chloroacetate and vinyl benzoate, vinyl pyridine, vinyl chloride, vinylidene chloride, maleic acid, maleic anhydride, styrene and derivatives of styrene such as chloro styrene, hydroxy styrene and alkylated styrenes, wherein the alkyl group contains from one to ten carbon atoms.

A preferred acrylic resin is derived from three monomers and comprises 35 to 60 mole % (preferably 40 to 50 mole %) of ethyl acrylate, 30 to 55 mole % (preferably 40 to 50 mole %) of methyl methacrylate, and 2 to 20 mole % (preferably 5 to 10 mol%) of acrylamide or methacrylamide, and preferably comprises approximate molar proportions 46/46/8% respectively of ethyl acrylate/methyl methacrylate/acrylamide or methacrylamide. Preferably, the polymer is thermoset, for example in the presence of about 25 weight % of a methylated melamine-formaldehyde resin.

A further preferred acrylic resin is derived from four monomers and comprises a copolymer comprising comonomers (a) 35 to 40 mole % alkyl acrylate, (b) 35 to 40 mole % alkyl methacrylate, (c) 10 to 15 mole % of a monomer containing a free carboxyl group, and (d) 15 to 20 mole % of a monomer containing a sulphonic acid group and/or a salt thereof. Ethyl acrylate is a particularly preferred monomer (a) and methyl methacrylate is a particularly preferred monomer (b). Monomer (c) containing a free carboxyl group (i.e. a carboxyl group other than those involved in the polymerisation reaction by which the copolymer is formed) suitably comprises a copolymerisable unsaturated carboxylic acid, and is preferably selected from acrylic acid, methacrylic acid, maleic acid, and/or itaconic acid (and preferably from acrylic acid and itaconic acid). The sulphonic acid group monomer (d) may be present as the free acid and/or a salt thereof, for example as the ammonium, substituted ammonium, or an alkali metal, such as lithium, sodium or potassium, salt. The sulphonate group does not participate in the polymerisation reaction by which the copolymer resin is formed. The sulphonic acid group monomer is preferably aromatic, and more preferably is p-styrene sulphonic acid and/or a salt thereof.

The weight average molecular weight ($M_w$; measured as described herein) of the acrylic resin can vary over a wide range but is preferably in the range from 10,000 to 1,000,000, and more preferably 50,000 to 200,000.

The acrylic resin component of the ink-receptive layer preferably comprises at least 30%, more preferably in the range from 40 to 99%, particularly 50 to 85%, and especially 70 to 80% by weight relative to the total weight of the ink-receptive layer. The acrylic resin of the ink-receptive layer is preferably the major component of the layer.

The composition from which the ink-receptive layer of the second embodiment is derived suitably also contains a cross-linking agent, particularly wherein the ink-receptive layer is an acrylic resin-containing layer. The cross-linking agent functions to improve adhesion to the polyester base layer. The cross-linking agent should also function to internally cross-link the ink-receptive layer to provide solvent resistance. Suitable cross-linking agents comprise epoxy resins, alkyd resins, amine derivatives such as hexamethoxymethyl melamine, and/or condensation products of an amine, e.g. melamine, diazine, urea, cyclic ethylene urea, cyclic propylene urea, thiourea, cyclic ethylene thiourea, alkyl melamines, aryl melamines, benzo guanamines, guanamines, alkyl guanamines and aryl guanamines, with an aldehyde, e.g. formaldehyde. A useful condensation product is that of melamine with formaldehyde. The condensation product is optionally alkoxylated. The cross-linking agent may suitably be used in amounts of up to 70%, preferably in the range from 1 to 60%, more preferably 15 to 50%, and especially 20 to 30% by weight relative to the total weight of the ink-receptive layer. A catalyst is preferably employed to facilitate cross-linking action of the cross-linking agent. Preferred catalysts for cross-linking melamine formaldehyde include para toluene sulphonic acid, maleic acid stabilised by reaction with a base, morpholinium paratoluene sulphonate, and ammonium nitrate.

The composition from which the ink-receptive layer of the second embodiment is derived optionally contains a plasticizer to aid film formation and handling. Any suitable plasticizer may be used, for instance phthalate esters such as alkyl benzyl phthalates, dialkyl adipate and m.p-cresol propoxylate.

The acrylic resin is generally water-insoluble. Typically, the acrylic resin is applied to the polyester base layer as a coating composition in the form of an aqueous dispersion.

An acrylic resin-containing ink-receptive layer may be applied, typically in the form of a coating composition, before, during or after the stretching operation in the production of an oriented film. The coating composition is preferably applied to the polyester base layer between the two stages (longitudinal and transverse) of a biaxial stretching operation. An acrylic resin-coated polyester base layer is heated (typically up to 240°C, preferably up to 220° C) in order to drive off the diluent of the composition (normally water, although organic solvent(s) can be used additionally or alternatively), and to assist in coalescing and forming the coating into a continuous and uniform layer, as well as facilitating cross-linking of cross-linkable coating compositions. Any suitable conventional coating technique such as dip coating, bead coating, reverse roller coating or slot coating may be used. The coating composition is preferably applied to the polyester base layer at a dry coat weight in the range from about 0.05 to 5 mg/dm$^2$, especially 0.1 to 2.0 mg/dm$^2$.

The thickness of an ink-receptive layer (preferably the acrylic resin-containing ink-receptive layer) in the second embodiment is preferably no more than 1.5 $\mu$m, more preferably in the range of from 0.01 to 1.0 $\mu$m, and particularly 0.02 to 0.5 $\mu$m.

The multi-layer films of the present invention preferably exhibit an Ultimate Tensile Strength (UTS) in each of the longitudinal and transverse directions of the film of at least 1300 N/cm$^2$, preferably at least 1350 N/cm$^2$, preferably at least 1400 N/cm$^2$. Preferably, the UTS in at least one direction (preferably at least the longitudinal direction) is at least 1400, preferably at least 1450, preferably at least 1500 N/cm$^2$.

The multi-layer films of the present invention preferably exhibit an Elongation To Break (ETB) in each of the longitudinal and transverse directions of the film of at least 250 %, preferably at least 270 %, preferably at least 280 %, preferably at least 290 %, preferably at least 300 %.

The multi-layer films of the present invention preferably exhibit an F5 value (stress at 5% elongation) in each of the longitudinal and transverse directions of the film of at least 860 N/cm$^2$, preferably at least 870 N/cm$^2$, preferably at least 880 N/cm$^2$, preferably at least 890 N/cm$^2$, preferably at least 900 N/cm$^2$.

It will be appreciated that the terms "longitudinal direction" and "transverse direction" of the film refer to the directions in which a film was stretched during its manufacture. The term "machine direction" is also used herein to refer to the longitudinal direction.

The multi-layer films of the present invention exhibit a delamination strength (measured as the heat-seal strength of the multi-layer film to itself, wherein two multi-layer films comprising a polyester base layer and a copolyester heat-sealable layer are heat-sealed together such the heat-sealable layers of each film are in contact with each other, as described herein) of at least 12 N/cm, preferably at least 13 N/cm, preferably at least 14 N/cm, preferably at least 15 N/cm.

The multi-layer films of the present invention offer particular advantages in the manufacture of laminated cards, as described hereinabove.

According to the present invention, there is provided a multi-layer card as defined in claim 1. The multi-layer card comprises a first multi-layer film as described herein.

Preferably, the multi-layer card further comprises a second multi-layer film as described herein which is disposed on a second surface of the polymeric inlay layer, and preferably further comprising a second polymeric overlay layer disposed on said second multi-layer film, such that the layer order is second polymeric overlay layer, second multi-layer film, polymeric inlay layer, first multi-layer film and first polymeric overlay layer. The second multi-layer film may be the same as or different to the first multi-layer film, and is preferably the same. In other words, each of the polyester base layer and heat-sealable copolyester layer(s) of the second multi-layer film may, independently, be the same as or different to the corresponding polyester base layer and heat-sealable copolyester layer(s) of the first multi-layer film, but they are preferably the same. A symmetrical layer structure is preferred.

Where the multi-layer film comprises a single heat-sealable copolyester layer (A), for instance in respect of the second embodiment of the multi-layer film described hereinabove, the multi-layer film is disposed in the multi-layer card such that the heat-sealable copolyester layer (A), rather than the ink-receptive layer, is facing the polymeric inlay layer.

The first multi-layer film may be disposed directly on the first surface of the polymeric inlay layer. The optional second multi-layer film may be disposed directly on the second surface of the polymeric inlay layer. Optionally, an intervening adhesive layer may be present between the polymeric inlay layer and multi-layer film in order to increase delamination resistance therebetween.

The first polymeric overlay layer may be disposed directly on the surface of said first multi-layer film. A second polymeric overlay layer may be disposed directly on the surface of said (optional) second multi-layer film. Optionally, an intervening adhesive layer may be present between a polymeric overlay layer and said multi-layer film in order to increase delamination resistance therebetween. Where an adhesive layer is used, the polymeric overlay layer typically comprises an adhesive coating on the surface which contacts said multi-layer film.

The composition of the polymeric overlay layer is suitably selected from materials which include polyester (such as PET and including copolyesters such as TA/CHDM/EG copolyesters, especially wherein the glycol fraction comprises about 33:67 of CHDM:EG), polycarbonate, polyolefin, PVC, ABS and/or paper, and preferably the polymeric overlay layer is PVC. Where the multi-layer card comprises multiple polymeric overlay layers, the polymeric overlay layers may be the same as or different to each other, but are preferably the same. A polymeric overlay layer is preferably a self-supporting film. The polymeric overlay layer provides support for the card, and to provide protection, including security, for information imparted to and contained in the card. It will be appreciated that the polymeric overlay layer is suitably optically clear in order that the information imparted to and contained in the card can be read. The thickness of a polymeric overlay layer is preferably from about 25 to about 150 μm, preferably at least about 50 μm, and preferably from about 80 μm to about 120 μm.

The composition of the polymeric inlay layer is suitably selected, independently, from the materials described hereinabove for the polymeric overlay layer. The thickness of the polymeric inlay layer is preferably from about 50 to about 500 μm, preferably at least about 75 μm, preferably at least about 100 μm, preferably from about 100 μm to about 400 μm, and preferably at least about 300 μm.

The multi-layer card according to the present invention can be used in any of the conventional card applications known in the art, including as an identification card or magnetic card, such as a credit card, and including contactless cards, pre-paid cards such as travel or telephone cards, and "smart" cards such as cards capable of storing information about financial transactions. An electronic chip may be present at the surface of the card, or encapsulated therein, for example in an epoxy material of other suitable encapsulant.

The multi-layer card preferably has a thickness in the range from 150 to 1000 μm, preferably at least about 200 μm, preferably at least about 250 μm, preferably at least about 500 μm, preferably at least about 650 μm, and preferably no more than about 900 μm, particularly no more than about 850 μm.

The multi-layer card preferably has a length in the range from 70 to 100 mm, more preferably 80 to 90 mm, and particularly about 86 mm, and a width in the range from 40 to 70 mm, more preferably 50 to 60 mm, and particularly about 54.5 mm.

The multi-layer card is preferably formed by a lamination process, by which is meant that two or more separate self-supporting film structures, which may themselves contain more than one layer, are contacted and bonded together to form the card. Lamination is effected by conventional means, and typically comprises the application of heat and/or pressure.

It is generally desirable for a card comprising the multi-layer film(s), polymeric inlay layer and polymeric overlay layer(s) to be co-terminous along all edges.

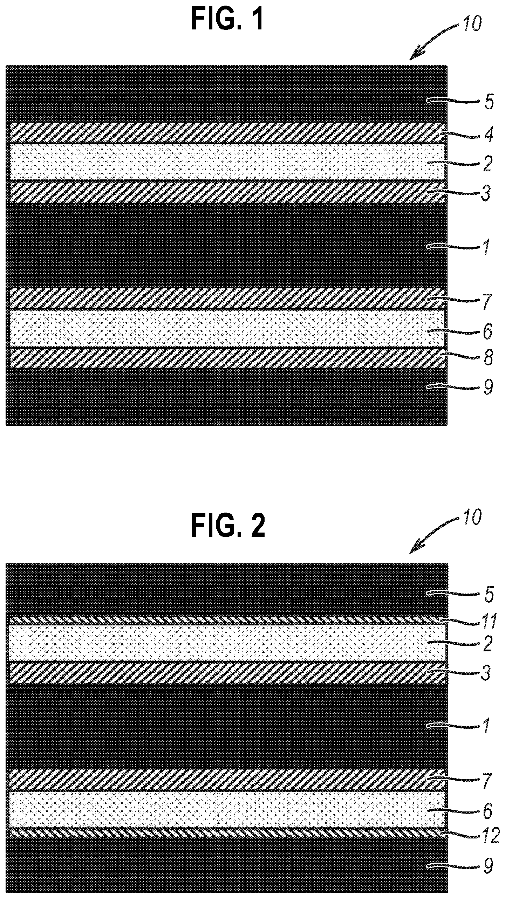

The invention is illustrated by reference to Figure 1 showing a multi-layer card (10), in which a first multi-layer film comprising a polyester base layer (B) (2), a first heat-sealable copolyester layer (A1) (3) and a second heat-sealable copolyester layer (A2) (4) is disposed on a first surface of a polymeric inlay layer (1). A second multi-layer film comprising a polyester base layer (B) (6), a first heat-sealable copolyester layer (A1) (7) and a second heat-sealable copolyester layer (A2) (8) is disposed on the second surface of the polymeric inlay layer (1). On each of the second heat-sealable copolyester layers (A2) (4, 8), there is a disposed a polymer overlay layer (5,9). Figure 2 shows a multi-layer card (10), in which a first multi-layer film comprising a polyester base layer (B) (2), a heat-sealable copolyester layer (A) (3) and an ink-receptive layer (11) is disposed on a first surface of a polymeric inlay layer (1). A second multi-layer film comprising a polyester base layer (B) (6), a heat-sealable copolyester layer (A) (7) and an ink-receptive layer (12) is disposed on the second surface of the polymeric inlay layer (1). On each of the ink-receptive layers (11, 12). there is a disposed a polymer overlay layer (5,9).

*Property Measurement*

The following analyses were used to characterize the films described herein:

(i) Optical clarity is evaluated by measuring total luminance transmission (TLT) and haze (% of scattered transmitted visible light) through the total thickness of the film using an M57D spherical hazemeter (Diffusion Systems) according to the standard test method ASTM D1003.

(ii) Transmission Optical Density (TOD) is measured using a Macbeth Densitometer TR 927 (obtained from Dent and Woods Ltd, Basingstoke, UK) in transmission mode.

(iii) L*, a* and b* colour co-ordinate values (CIE (1976)), whiteness index and yellowness index are measured using standard colouring measuring apparatus conforming to the principles of ASTM D 313, such as a Konica Minolta CM3600a.

(iv) Intrinsic viscosity (in units of dL/g) of the polyester and polyester film is measured by solution viscometry in accordance with ASTM D5225-98(2003) on a Viscotek™ Y-501C Relative Viscometer (see, for instance, Hitchcock, Hammons & Yau in *American Laboratory* (August 1994) "The dual-capillary method for modem-day viscometry") by using a 0.5% by weight solution of polyester in o-chlorophenol at 25°C and using the Billmeyer single-point method to calculate intrinsic viscosity:

$$\eta = 0.25\eta_{red} + 0.75(\ln \eta_{rel})/c$$

wherein:

$\eta$ = the intrinsic viscosity (in dL/g),

$\eta_{rel}$ = the relative viscosity,

c = the concentration (in g/dL), &

$\eta_{red}$ = reduced viscosity (in dL/g), which is equivalent to $(\eta_{rel}-1)/c$ (also expressed as $\eta_{sp}/c$ where $\eta_{sp}$ is the specific viscosity).

(v) The Ultimate Tensile Strength (UTS), Elongation To Break (ETB) and the F5 value (stress at 5% elongation) are measured according to test method ASTM D882. Using a straight edge and a calibrated sample cutter (10mm+\-0.5mm) five strips (100mm in length) of the film are cut along the machine direction. Each sample is tested using an Instron model 3111 materials test machine, using pneumatic action grips with rubber jaw faces. Temperature (23°C) and relative humidity (50%) are controlled. The crosshead speed (rate of separation) is 25 mm.min$^{-1}$. The strain rate is 50%. Elongation to Break ($\varepsilon_B$ (%)) is defined as:

$$\varepsilon_B (\%) = (\text{extension at break} / L_0) \times 100$$

where $L_0$ is the original length of the sample between grips.

(vi) The delamination strength of the multi-layer films is assessed by measuring the heat-seal strength of the film to itself, as follows. A4 samples of the unprinted multi-layer film are laminated in a card structure similar to that shown in Figure 1 except that the polymeric inlay layer (1) is absent. Thus, two multi-layer films of the present invention comprising a polyester base layer and a copolyester heat-sealable layer are positioned together such that the heat-sealable layers of each film are in contact with each other, with polymer overlay layers (5,9) disposed on the polyester base layer of each multi-layer film. The polymeric overlay layer is an adhesive-coated PVC film (50 μm; Sicoplast 167_B with HP2L1 coating; Bilcare®), wherein the adhesive-coated surface of the PVC overlay is contacted with the polyester base layer of each multi-layer film, The assembly is laminated in a Carver press at 140°C for 15 minutes at 6000 kg pressure. The laminates are then cooled to 50°C, the pressure released and the laminates removed from the press. The laminates are cut into cards (dimensions 86 × 54.5mm) using an Oasys card punch cutter and the cards are then cut lengthways into strips having a width of 10mm. The delamination is initiated by using a knife to cut a line across the 10mm strip deep enough such that it cuts through the overlay and just into the first layer of the multi-layer film. An attempt is then made to peel back the overlay from the strip. If initiated, the test strip is fixed to a card using double sided tape and the peel tail threaded through roller bars on an Instron test machine. The peel tail is clamped in the bottom jaws of the Instron machine and the top head (roller bars) moved upwards at 300mm/min, measuring the force required to peel the overlay from the strip at a 90° angle. If an overlay peel cannot be initiated or immediately tears or snaps on peeling no numerical data is obtainable and the sample considered as impossible to peel.

(vii) Tamper-resistance may also be assessed as the overlay peel strength of the multi-layer cards, measured as follows. A4 samples of the unprinted multi-layer film are laminated in the card structure according to Figure 1 in a Carver press at 140°C for 15 minutes at 6000 kg pressure. The overlay is an uncoated PVC film (100 $\mu$m; Gemalto®). The inlay is a white uncoated PVC film (270 $\mu$m; Gemalto®). The laminates are then cooled to 50°C, the pressure released and the laminates removed from the press. The laminates are cut into cards (dimensions 86 × 54.5mm) using an Oasys card punch cutter and the cards are then cut lengthways into strips having a width of 10mm. The overlay peel test was conducted substantially in accordance with ISO/IEC10373-1. Thus, overlay peels are initiated by using a knife to cut a line across the 10mm strip deep enough such that it cuts through the overlay and just into the multi-layer film. An attempt is then made to peel back the overlay from the strip. If initiated, the test strip is fixed to a card using double sided tape and the peel tail threaded through roller bars on an instron test machine. The peel tail is clamped in the bottom jaws of the Instron machine and the top head (roller bars) moved upwards at 300mm/min, measuring the force required to peel the overlay from the strip at a 90° angle. If the overlay peel cannot be initiated or immediately tears or snaps on peeling, no numerical data is obtainable and the sample considered as impossible to peel. Eight test strips are measured per film sample, and the overlay peel strength reported as the mean of these measurements.

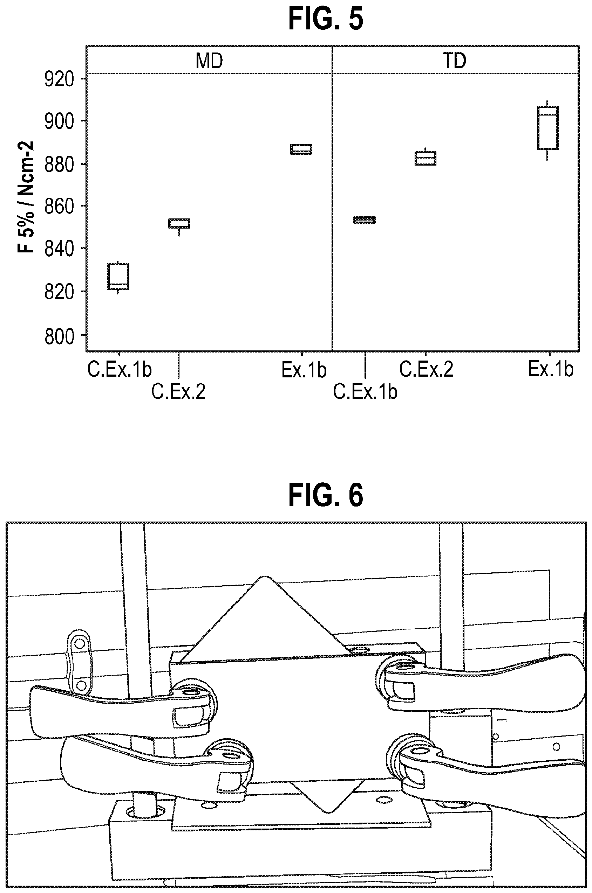

(viii) The delamination susceptibility of the multi-layer card may be further assessed by the "corner impact test", conducted as follows. A laminated card is prepared as described above for the "delamination strength" test, except that that a polymeric inlay layer is present (100 $\mu$m TA/CHDM/EG copolyester having a CHDM:EG molar ratio of 33:67). A corner impact test is performed using an impact tester (see Figure 6), by dropping the card onto an exposed corner from a height of 265 mm in a weighted holder. The impact weight is 13.3 N +/-0.5N. A failure is delamination or fracture of the polymeric layers.

(ix) The water content of titanium dioxide is measured by a Karl Fischer titration, preferably a coulometric Karl Fischer titration. Typically, the sample is heated in an oven upstream of the titration cell and the released water is transferred by a flow of dry carrier gas to the titration cell where it is determined by a Karl Fischer titration. Suitably, a Metrohm 768 KF Coulometer coupled to a Metrohm 768 KF Oven is used to conduct a coulometric Karl Fischer titration.

The invention is further illustrated by reference to the following examples. The examples are not intended to limit the scope of the invention as described above.

## EXAMPLES

In the following discussion, intrinsic viscosity values are those measured on the polymer chip unless otherwise specified.

## Examples 1a and 1b

Polyester composition P1 comprised a PET polymer having IV = 0.62, 4 wt% copolyesterether (Hytrel® 4068; DuPont), 12.5 wt% of rutile $TiO_2$ comprising an organic coating on its surface (TR28, available from Tioxide ®), and 3 wt% commercially available antioxidant.

Copolyester composition P2 comprised IPA-containing PET-based copolyester (TA:IPA = 82:18) having IV = 0.64 and containing 0.125 wt% china clay based on the weight of the copolyester.

An acrylic resin coating composition was prepared with the following ingredients:

(i) Acrylic resin (46% w/w aqueous latex of methyl methacrylate/ethyl acrylate/methacrylamide in a molar ratio of 46/46/8 mole %; Primal® AC201ER): 14.1 litres;
(ii) Methoxylated melamine-formaldehyde (Cymel® 385; aqueous): 7.1 litres;
(iii) Ammonium nitrate (10% w/w aqueous solution): 90 ml ;
(iv) Alkyl (C7-C9) benzyl phthalate plasticizer (Santicizer 261A):1.5 litres; and
(v) Demineralised water to 25.2 litres.

A multi-layer film comprising a base layer of polyester composition P1 and a heat-sealable layer of copolyester P2 was extruded and cast using a standard melt coextrusion system. The coextrusion system was assembled using two independently operated extruders which fed separate supplies of polymeric melt to a standard coextrusion block or junction at which these streams were joined. From the coextrusion block, the melt-streams were transported to a conventional, flat film extrusion die. The melt temperature of polyester P1 was 270°C, and the melt temperature of copolyester P2 was 265°C. The melt curtain was cast from the common coextrusion die, and then quenched in temperature onto a rotating, chilled metal drum. The cast film was collected at a process speed of about 3.8 m/min. The cast extrudate was stretched in the direction of extrusion to approximately 2.9 times its original dimensions at a temperature of 82°C The stretched film was then coated on the surface of the polyester base layer with the acrylic resin coating composition. The coated film was then passed into a stenter oven at a temperature of 115°C where the film was dried and stretched in the sideways direction to approximately 3.2 times its original dimensions. The biaxially stretched film was heat-set at about 230°C. The final film was 152 $\mu$m in thickness and comprised three layers having an ABC structure, wherein the heat-sealable copolyester layer (A) was approximately 15 $\mu$m thick, and the acrylic ink-receptive layer (C) was approximately 0.04 $\mu$m thick. This film is referred to as Example 1a.

The process was also used to make a further multi-layer film, referred to herein as Example 1b, which had a final thickness 254 $\mu$m, and in which the heat-sealable copolyester layer and the acrylic ink-receptive layer (C) were approximately the same thicknesses as Example 1a.

**Comparative Examples 1a (152 $\mu$m) and 1b (254 $\mu$m)**

Multi-layer films similar to those described in Example 1 were prepared, except that anatase $TiO_2$ (AHR-F, available from Clariant®), which does not have an organic coating, was used in the base layer. The film is therefore essentially the same as Example 4 in US-7232802-B, and it was this structure on which the present inventors sought to improve.

**Comparative Example 2 (254 $\mu$m)**

A multi-layer film similar to that described in Comparative Example 1b was prepared, except that anatase $TiO_2$ (1071, available from Kronos®), which does not have an organic coating, was used in the base layer.

The optical properties of the 254 $\mu$m films of Example 1b and Comparative Examples 1b and 2 were tested as described herein. The results are presented in Table 1 below and demonstrate that the films of the present invention exhibit optical properties which are comparable to the current commercially available films, as represented by Comparative Example 1b, and well within the targeted and desirable optical properties.

**Table 1**

| Film Identity | L* | a* | b* |
|---|---|---|---|
| Comp. Example 1b | 93.34 | -1.26 | -3.17 |
| Comp. Example 2 | 93.44 | -1.18 | -3.71 |
| Example 1b | 93.46 | -1.42 | -2.30 |

The optical density of the 152 $\mu$m multi-layer films of Example 1a and Comparative Example 1a were measured as described herein. The optical density of the Example 1a film of the present invention exceeded 1.0 and was unexpectedly greater than that of the film of Comparative Example 1a.

The optical density of the 254 $\mu$m multi-layer films of Example 1b and Comparative Example 1b were also measured as described herein. The optical density of the Example 1b film of the present invention exceeded 1 .7 and was unexpectedly greater than that of the film of Comparative Exampie 1b.

Given that it was known in the art that anatase $TiO_2$ normally provides superior optical properties in polyester films compared to rutile $TiO_2$, these results are particularly surprising.

The delamination strength of the Examples was assessed using the test method described herein. It was observed that failure of the laminate normally occurs just beneath the surface of a polyester base layer, rather than at the interfacial boundary of the heat-sealable copolyester layers with each other, or the interfacial boundary of heat-sealable layer and polyester base layer. The results are presented in Table 2 below, and show that the 152 $\mu$m multi-layer film of Example 1a unexpectedly exhibits statistically significantly greater cohesive strength within the polyester base layer, and hence provides significantly greater delamination resistance, compared to the current commercially available conventional films as represented by Comparative Example 1a. The same improvement is observed with the 254 $\mu$m film of Example 1b when compared to Comparative Examples 1b and 2.

**Table 2**

| Sample | Thickness ($\mu$m) | Average Delamination strength (N/cm) |
|---|---|---|
| Comparative Example 1a | 152 | 11.1 |
| Example1a | 152 | 14.3 |
| Comparative Example 1b | 254 | 9.8 |
| Comparative Example 2 | 254 | 9.6 |
| Example 1b | 254 | 15.1 |

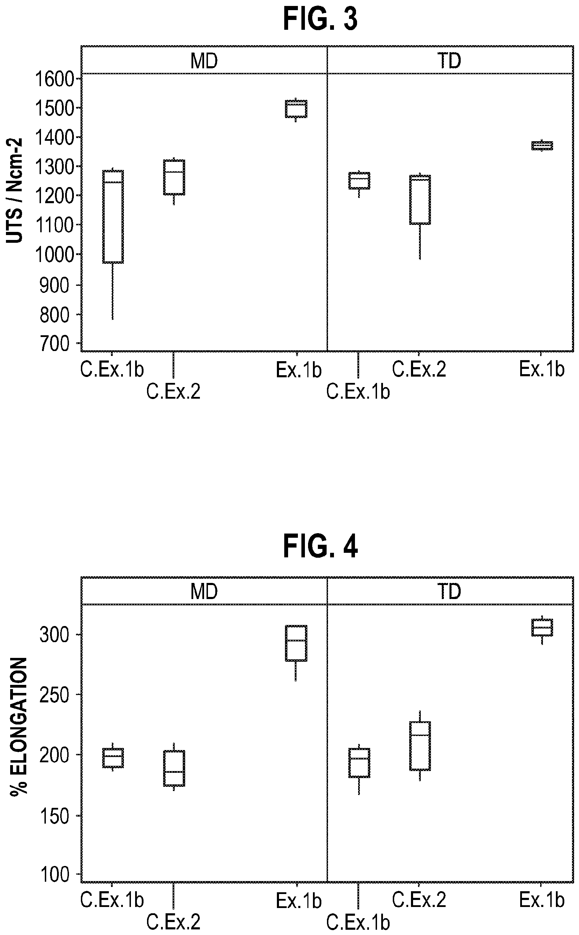

The mechanical properties of the films of Example 1b and Comparative Examples 1b and 2 were tested as described herein and the results are shown in Figure 3 (UTS), Figure 4 (ETB) and Figure 5 (F5 value). The abbreviations "MD" and "TD" refer to the machine and transverse directions of the film, respectively. The results demonstrate the unexpectedly superior mechanical properties and cohesive strength of the films of the present invention.

The delamination susceptibility of multi-layer cards according to the present invention was tested using the corner impact test described herein, with up to 16 impacts. The results are presented in Table 3 below and demonstrate the unexpectedly superior delamination and tensile properties of the multi-layer cards of the present invention.

**Table 3**

| Film Identity of the Card | Corner Impact/16 | Failure Mode |
|---|---|---|
| Comp. Example 1b | 12 | 3 x Delamination; 1 x Brittle |
| Comp. Example 2 | 14 | Delamination |
| Example 1b | 16 | No failures; no delamination; no brittleness |

The films and cards of the present invention thus exhibit unexpectedly superior delamination resistance, security and tamper-resistance.

**Example 4**

A multi-layer film comprising a base layer of polyester composition P1 above and two outer layers of copolyester composition P2 was extruded and cast using a standard melt coextrusion system. The coextrusion system was assembled using two independently operated extruders which fed separate supplies of polymeric melt to a standard coextrusion block or junction at which these streams were joined. From the coextrusion block, the melt-streams were transported to a conventional, flat film extrusion die. The melt temperature of polyester P1 was 270°C, and the melt temperature of copolyester P2 was 265°C. The melt curtain was cast from the common coextrusion die, and then quenched in temperature onto a rotating, chilled metal drum. The cast extrudate was stretched in the direction of extrusion to approximately 2.9 times its original dimensions at a temperature of 82°C. The cooled stretched film was then passed into a stenter oven at a temperature of 115°C where the film was dried and stretched in the sideways direction to approximately 3.9 times its original dimensions. The biaxially stretched film was heat-set at about 230°C. The final film was about 254 $\mu$m in thickness and comprised three layers having an ABA structure, wherein the outer layers (A1) and (A2) were each 15 $\mu$m thick. The film exhibited excellent optical, properties, mechanical properties and delamination strength, measured according to the test methods described herein. Multi-layer cards incorporating these multi-layer films exhibited excellent overlay peel strength and low delamination susceptibility.

**Claims**

1. A multi-layer card comprising a polymeric inlay layer having a first surface and a second surface, further comprising a first multi-layer film which is disposed on the first surface of the polymeric inlay layer, and further comprising a first polymeric overlay layer which is disposed on said first multi-layer film, such that the layer order is polymeric inlay layer, first multi-layer film and first polymeric overlay layer, wherein the multi-layer film comprises:

    (i) a polyester base layer (B) having a first and second surface wherein the polyester of the base layer is a crystallisable polyester; and

(ii) a heat-sealable copolyester layer (A) disposed on one or both surfaces of said polyester base layer (B),

wherein the polyester base layer (B) comprises titanium dioxide particles in an amount of from about 1 to about 30 wt% by total weight of the base layer, wherein said particles are coated with an organic coating.

2. A multi-layer card according to claim 1 wherein the polyester of the base layer is selected from polyethylene terephthalate (PET) and polyethylene 2,6-naphthalate (PEN).

3. A multi-layer card according to any preceding claim wherein the polyester base layer further comprises a copolyesterether, preferably in an amount of from about 0.2 to about 10 wt% relative to the total weight of the polyester base layer;

optionally wherein the copolyesterether comprises at least one polyester block and at least one polyether block wherein the ratio of polyester:polyether is in the range 25-55 : 45-75 by weight % of the copolyesterether, and/or optionally wherein the copolyesterether comprises at least one polyester block of an alkylene terephthalate, and wherein the copolyesterether comprises at least polyether block which is a poly(alkylene oxide) glycol selected from poly(ethylene oxide) glycol, poly(propylene oxide) glycol and poly(tetramethylene oxide) glycol.

4. A multi-layer card according to any preceding claim wherein the copolyester of the heat-sealable layer(s) is selected from copolyesters derived from repeating units comprising or consisting of a first aromatic dicarboxylic acid, a second aromatic dicarboxylic acid and an aliphatic glycol, and preferably copolyesters derived from repeating units consisting of terephthalic acid, isophthalic acid and ethylene glycol, preferably wherein the isophthalic acid is present in an amount of from about 15 to about 20 mol% of the acid fraction of the copolyester.

5. A multi-layer card according to any preceding claim wherein the polyester base layer (B) is biaxially oriented.

6. A multi-layer card according to any preceding claim wherein the multi-layer film is a coextruded multi-layer film.

7. A multi-layer card according to any preceding claim wherein the multi-layer film is opaque, and preferably exhibits a Transmission Optical Density (TOD) of at least 1.0;

and/or wherein the multi-layer film is white, and preferably exhibits a whiteness index of at least 95;
and/or wherein the multi-layer film exhibits an L* value of greater than 92.00; an a* value in the range from -2.00 to -0.50; and a b* value in the range from -4.00 to -1.00.

8. A multi-layer card according to any preceding claim wherein said titanium dioxide is rutile titanium dioxide; and/or wherein the amount of titanium dioxide in the polyester base layer is in the range from about 10 to about 15% by weight, relative to the total weight of the polyester layer.

9. A multi-layer card according to any preceding claim wherein said organic coating does not comprise a silane, and/or wherein the organic coating is not or does not comprise a polysiloxane, and/or wherein said organic coating is not or does not comprise a polyolefin resin, and/or wherein said titanium dioxide particles are not coated titanium dioxide particles wherein the coating comprises a coupling agent and a polyolefin resin, and/or wherein said organic coating is an organophosphorus compound.

10. A multi-layer card according to any preceding claim wherein the titanium dioxide particles are coated with an alkylphosphonic acid or an ester of an alkylphosphonic acid wherein the alkylphosphonic acid contains from 6 to 22 carbon atoms, for example wherein the alkylphosphonic acid or ester thereof has the formula $P(R)(=O)(OR^1)(OR^2)$, wherein:

R is an alkyl group or a cycloalkyl group containing 6 to 22 carbon atoms; and
$R^1$ and $R^2$ are each hydrogen, an alkyl group, a cycloalkyl group, an aryl group or an aralkyl group, for example wherein $R^1$ and $R^2$ are independently selected from hydrogen and hydrocarbyl groups containing up to 10 carbon atoms, and preferably $R^1$ and $R^2$ are hydrogen.

11. A multi-layer card according to claim 10 wherein the alkyl group of said alkylphosphonic acid, or R, contains from 6 to 14 carbon atoms and is a straight chain alkyl group.

and/or wherein the alkylphosphonic acid or ester thereof is selected from n-octylphosphonic acid and its esters, n-decylphosphonic acid and its esters, 2-ethylhexylphosphonic acid and its esters and camphyl phosphonic acid and its esters.

12. A multi-layer card according to any of claims 1 to 9 wherein said organic coating is a polymeric organic coating,

optionally wherein the polymeric organic coating is derived from monomers containing carbon, hydrogen and oxygen atoms, and optionally further comprising nitrogen and/or phosphorus and/or sulphur atoms,
and/or optionally wherein the polymeric backbone of said polymeric coating does not contain silicon atoms.

13. A multi-layer card according to claim 12 wherein (i) said titanium dioxide particles are coated with polymerised monomer, and wherein said coated titanium dioxide particles are obtainable by dispersing titanium dioxide particles in water at a pH value higher than the isoelectric point of said titanium dioxide particles (and preferably at a pH above 7 and preferably at a pH of 9 to 11) in the presence of a dispersing agent comprising a polymeric polybasic acid or a salt thereof to produce particles having a modified isoelectric point; adjusting the pH of the dispersion to a value below 9 but above the modified isoelectric point of the particles; and polymerising in the presence of the dispersion so produced one or more ethylenically unsaturated monomer(s);

and/or wherein (ii) said coated titanium dioxide particles comprise a coherent inner coating formed from a dispersing agent comprising a polymeric polybasic acid or a salt thereof and an outer coating formed from the polymerisation of one or more ethylenically unsaturated monomer(s);
and/or wherein (iii) said coated titanium dioxide particles comprise a polymeric coating formed from the polymerisation of one or more ethylenically unsaturated monomer(s) wherein a dispersing agent comprising a polymeric polybasic acid or a salt thereof is incorporated into the polymeric coating during polymerisation;
and/or wherein (iv) said polymeric polybasic acids are selected from polysulphonic acids, polyphosphonic acids and polycarboxylic acids, and preferably from polycarboxylic acids, or salts thereof,
and/or wherein (v) said polymeric polybasic acids are in salt form and wherein the acids are partially or fully neutralised, and/or the salts are the alkali metal salts or ammonium salts,
optionally wherein said polymeric polybasic acids are selected from polysulphonic acids selected from lignosulphonates, petroleum sulphonates and poly(styrene sulphonates), including poly(sodium 4-styrene sulphonate), or wherein said polymeric polybasic acids are selected from polymaleic acids, polyacrylic acids, substituted acrylic acid polymers, acrylic copolymers, including copolymers of an acrylic acid with sulphonic acid derivatives, including 2-acrylamido, 2-methyl propane sulphonic acid;
and/or wherein (vi) the amount of dispersing agent is from about 0.05 to about 5.0 wt%, preferably from about 0.1 to about 1.0 wt%, by weight of the titanium dioxide particle;
and/or wherein (vii) said ethylenically unsaturated monomer is polymerisable in aqueous solvents, preferably wherein the polymer produced is insoluble in water and optionally cross-linked by a cross-linking agent;
and/or wherein (viii) said ethylenically unsaturated monomer is selected from aliphatic and aromatic compounds containing a polymerisable unsaturated group, preferably wherein the polymerisable unsaturated group is selected from unsaturated carboxylic acids and unsaturated carboxylic acid esters;
and/or wherein (ix) said ethylenically unsaturated monomer is an acidic monomer selected from acrylic acid, methacrylic acid, itaconic acid, maleic acid or its anhydride, fumaric acid and crotonic acid, and esters of said acidic monomers, including methyl acrylate, ethyl acrylate, methyl methacrylate, butyl acrylate and ethyl methacrylate, and preferably wherein said ethylenically unsaturated monomer is selected from styrene, vinyl toluene, alpha methylstyrene, ethylene, vinyl acetate, vinyl chloride, acrylonitrile, and fluorinated monomers including fluorinated alkenes, fluorinated ethers, fluorinated acrylic and methacrylic acids and esters thereof and fluorinated heterocyclic compounds, and preferably wherein said ethylenically unsaturated monomer is selected from unsaturated carboxylic acids and unsaturated carboxylic acid esters, preferably from methyl acrylate, ethyl acrylate, butyl acrylate, butyl methacrylate, vinyl acetate and vinyl isobutylether;
and/or wherein (x) said polymeric organic coating is cross-linked, preferably by virtue of the presence of one or more cross-linking agent(s), preferably wherein the cross-linking agent is selected from di- and poly-functional ethylenically unsaturated monomers, preferably from ethylene glycol dimethacrylate, ethylene glycol diacrylate, allyl methacrylate, allyl acrylate, 1,3-butanediol diacrylate, divinyl benzene and 1,3-butanediol dimethacrylate, preferably wherein said cross-linking agent in an amount of from about 1 wt% to about 20 wt%, preferably from about 1 wt% to about 10 wt%, based on the total weight of the ethylenically unsaturated monomer(s)

14. A multi-layer card according to any preceding claim wherein said coated titanium dioxide has a water content such that it exhibits a loss at 290°C of no greater than 1.0%, preferably no greater than 0.5%, as measured by coulometric Karl Fischer titration.

15. A multi-layer card according to any preceding claim wherein said organic coated titanium dioxide is not hydrophobic, and is preferably hydrophilic;

and/or wherein the organic coating is present in an amount of from about 0.1 to about 200 wt%, preferably from about 0.1 to about 100 wt%, from about 0.5 to about 100 wt%, from about 2.0 to about 20 wt%, by weight of the titanium dioxide;
and/or wherein the volume ratio of the titanium dioxide particle particles to the organic coating is from 1:1 to 1:25 by volume, and preferably from 1:2 to 1:8;
and/or wherein said titanium dioxide particles have a volume-distributed median primary particle diameter in the range from 0.15 to 0.25 $\mu$m.

16. A multi-layer card according to any preceding claim wherein the thickness of the polyester base layer (B) is in the range from 100 to 350 $\mu$m, and the thickness of the or each heat-sealable copolyester layer is in the range of from about 3 to about 30 $\mu$m.

17. A multi-layer card according to any of claims 1 to 16 wherein the multi-layer film comprises a polyester base layer (B), a first heat-sealable copolyester layer (A1) disposed on a first surface of the polyester base layer and a second heat-sealable copolyester layer (A2) disposed on a second surface of the polyester base layer.

18. A multi-layer card according to any of claims 1 to 16 wherein the multi-layer film comprises a polyester base layer (B), a heat-sealable copolyester layer (A) disposed on a first surface of the polyester base layer and an ink-receptive layer disposed on the second surface of the polyester base layer, wherein said ink-receptive layer is different from said heat-sealable copolyester layer (A), and wherein the ink-receptive layer comprises an acrylic resin;

optionally wherein the acrylic resin comprises at least one monomer derived from an ester of acrylic acid and/or an ester of methacrylic acid, preferably an alkyl ester of acrylic and/or methacrylic acid where the alkyl group contains up to ten carbon atoms, and preferably wherein the acrylic resin comprises an alkyl acrylate and an alkyl methacrylate, and preferably wherein the acrylate monomer is present in a proportion in the range from 20 to 80 mole% and the methacrylate monomer is present in a proportion in the range from 20 to 80 mole %, and/or optionally wherein the thickness of the acrylic resin-containing layer is no more than 1.5 $\mu$m.

19. A multi-layer card according to any preceding claim wherein the multi-layer film exhibits at least one and preferably all of the following properties:

(i) an Ultimate Tensile Strength (UTS) in each of the longitudinal and transverse directions of the film of at least 1300 N/cm$^2$;
(ii) an Elongation To Break (ETB) in each of the longitudinal and transverse directions of the film of at least 250 %;
(iii) an F5 value in each of the longitudinal and transverse directions of the film of at least 860 N/cm$^2$; and
(iv) a heat-seal strength to itself, wherein two multi-layer films comprising a polyester base layer and a copolyester heat-sealable layer are heat-sealed together such the heat-sealable layers of each film are in contact with each other, of at least 12 N/cm, preferably at least 13 N/cm, preferably at least 14 N/cm, preferably at least 15N/cm.

20. A multi-layer card according to any of claims 1 to 19 further comprising a second multi-layer film which is disposed on a second surface of the polymeric inlay layer, and optionally further comprising a second polymeric overlay layer disposed on said second multi-layer film, such that the layer order is second polymeric overlay layer, second multi-layer film, polymeric inlay layer, first multi-layer film and first polymeric overlay layer, wherein said second multi-layer film is a multi-layer film as defined in any of claims 1 to 19, preferably wherein said second multi-layer film is the same as the first multi-layer film, and preferably wherein said second polymeric overlay layer is the same as said first polymeric overlay layer.

21. A multi-layer card according to any of claims 1 or 20 wherein the or each multi-layer film comprises a single heat-sealable copolyester layer (A) and said multi-layer film is disposed in the multi-layer card such that its heat-sealable copolyester layer (A) is facing the polymeric inlay layer.

22. A multi-layer card according to any of claims 1 to 21 wherein the polymeric inlay layer and the polymeric overlay layer are independently selected from polyester, polycarbonate, polyolefin, PVC, ABS and paper, and preferably from PVC;

and/or wherein said polymeric overlay layer is optically clear;
and/or wherein the multi-layer card has a thickness in the range from 250 to 850 μm.

23. A multi-layer film comprising:

(i) a polyester base layer (B) having a first and second surface wherein the polyester of the base layer is a crystallisable polyester; and
(ii) a heat-sealable copolyester layer (A) disposed on one or both surfaces of said polyester base layer (B),

wherein the polyester base layer (B) comprises titanium dioxide particles in an amount of from about 1 to about 30 wt% by total weight of the base layer, wherein said particles are coated with an organic coating, wherein said organic coating is an organophosphorus compound.

24. A multi-layer film according to claim 23 wherein the titanium dioxide particles are coated with an alkylphosphonic acid or an ester of an alkylphosphonic acid wherein the alkylphosphonic acid contains from 6 to 22 carbon atoms. for example wherein the alkylphosphonic acid or ester thereof has the formula $P(R)(=O)(OR^1)(OR^2)$, wherein:

R is an alkyl group or a cycloalkyl group containing 6 to 22 carbon atoms; and
$R^1$ and $R^2$ are each hydrogen, an alkyl group, a cycloalkyl group, an aryl group or an aralkyl group.
for example wherein $R^1$ and $R^2$ are independently selected from hydrogen and hydrocarbyl groups containing up to 10 carbon atoms, and preferably $R^1$ and $R^2$ are hydrogen.

25. A multi-layer film according to claim 24 wherein the alkyl group of said alkylphosphinic acid, or R, contains from 6 to 14 carbon atoms and is a straight chain alkyl group.
and/or wherein the alkylphosphonic acid or ester thereof is selected from n-octylphosphonic acid and its esters, n-decylphosphonic acid and its esters, 2-ethylhexylphosphonic acid and its esters and camphyl phosphonic acid and its esters.

26. A multi-layer film comprising:

(i) a polyester base layer (B) having a first and second surface wherein the polyester of the base layer is a crystallisable polyester; and
(ii) a heat-sealable copolyester layer (A) disposed on one or both surfaces of said polyester base layer (B),

wherein the polyester base layer (B) comprises titanium dioxide particles in an amount of from about 1 to about 30 wt% by total weight of the base layer, wherein said particles are coated with an organic coating, wherein said organic coating is a polymeric organic coating and wherein the polymeric backbone of said polymeric coating does not contain silicon atoms.

27. A multi-layer film according to claim 26 wherein said titanium dioxide particles are coated with polymerised monomer, and wherein said coated titanium dioxide particles are obtainable by dispersing titanium dioxide particles in water at a pH value higher than the isoelectric point of said titanium dioxide particles (and preferably at a pH above 7 and preferably at a pH of 9 to 11) in the presence of a dispersing agent comprising a polymeric polybasic acid or a salt thereof to produce particles having a modified isoelectric point; adjusting the pH of the dispersion to a value below 9 but above the modified isoelectric point of the particles; and polymerising in the presence of the dispersion so produced one or more ethylenically unsaturated monomer(s);

and/or wherein said coated titanium dioxide particles comprise a coherent inner coating formed from a dispersing agent comprising a polymeric polybasic acid or a salt thereof and an outer coating formed from the polymerisation of one or more ethylenically unsaturated monomer(s);
and/or wherein said coated titanium dioxide particles comprise a polymeric coating formed from the polymerisation of one or more ethylenically unsaturated monomer(s) wherein a dispersing agent comprising a polymeric polybasic acid or a salt thereof is incorporated into the polymeric coating during polymerisation.

28. A multi-layer film according to claim 27 wherein said polymeric polybasic acids are selected from polysulphonic acids, polyphosphonic acids and polycarboxylic acids, and preferably from polycarboxylic acids, or salts thereof;

and/or wherein said polymeric polybasic acids are in salt form and wherein the acids are partially or fully neutralised, and/or the salts are the alkali metal salts or ammonium salts,

for example wherein said polymeric polybasic acids are selected from polysulphonic acids selected from lignosulphonates, petroleum sulphonates and poly(styrene sulphonates), including poly(sodium 4-styrene sulphonate), or wherein said polymeric polybasic acids are selected from polymaleic acids, polyacrylic acids, substituted acrylic acid polymers, acrylic copolymers, including copolymers of an acrylic acid with sulphonic acid derivatives, including 2-acrylamido, 2-methyl propane sulphonic acid.

29. A multi-layer film according to any of claims 27 to 28 wherein the amount of dispersing agent is from about 0.05 to about 5.0 wt%, preferably from about 0.1 to about 1.0 wt%, by weight of the titanium dioxide particle;

and/or wherein said ethylenically unsaturated monomer is polymerisable in aqueous solvents, preferably wherein the polymer produced is insoluble in water and optionally cross-linked by a cross-linking agent;
and/or wherein said ethylenically unsaturated monomer is selected from aliphatic and aromatic compounds containing a polymerisable unsaturated group, preferably wherein the polymerisable unsaturated group is selected from unsaturated carboxylic acids and unsaturated carboxylic acid esters;
and/or wherein said ethylenically unsaturated monomer is an acidic monomer selected from acrylic acid, methacrylic acid, itaconic acid, maleic acid or its anhydride, fumaric acid and crotonic acid, and esters of said acidic monomers, including methyl acrylate, ethyl acrylate, methyl methacrylate, butyl acrylate and ethyl methacrylate, and preferably wherein said ethylenically unsaturated monomer is selected from styrene, vinyl toluene, alpha methylstyrene, ethylene, vinyl acetate, vinyl chloride, acrylonitrile, and fluorinated monomers including fluorinated alkenes, fluorinated ethers, fluorinated acrylic and methacrylic acids and esters thereof and fluorinated heterocyclic compounds, and preferably wherein said ethylenically unsaturated monomer is selected from unsaturated carboxylic acids and unsaturated carboxylic acid esters, preferably from methyl acrylate, ethyl acrylate, butyl acrylate, butyl methacrylate, vinyl acetate and vinyl isobutylether;
and/or wherein said polymeric organic coating is cross-linked, preferably by virtue of the presence of one or more cross-linking agent(s), preferably wherein the cross-linking agent is selected from di- and poly-functional ethylenically unsaturated monomers, preferably from ethylene glycol dimethacrylate, ethylene glycol diacrylate, allyl methacrylate, allyl acrylate, 1,3-butanediol diacrylate, divinyl benzene and 1,3-butanediol dimethacrylate, preferably wherein said cross-linking agent in an amount of from about 1 wt% to about 20 wt%, preferably from about 1 wt% to about 10 wt%, based on the total weight of the ethylenically unsaturated monomer(s).

**Patentansprüche**

1. Mehrschichtige Karte, umfassend eine polymere Einlegeschicht mit einer ersten Oberfläche und einer zweiten Oberfläche, des Weiteren umfassend eine erste Mehrschichtfolie, die auf der ersten Oberfläche der polymeren Einlegeschicht angeordnet ist, und des Weiteren umfassend eine erste polymere Überlagerungsschicht, die auf der ersten Mehrschichtfolie angeordnet ist, so dass die Schichtreihenfolge polymere Einlegeschicht, erste Mehrschichtfolie und erste polymere Überlagerungsschicht ist, wobei die Mehrschichtfolie umfasst:

(i) eine Polyesterbasisschicht (B) mit einer ersten und einer zweiten Oberfläche, wobei der Polyester der Basisschicht ein kristallisierbarer Polyester ist; und
(ii) eine heißsiegelbare Copolyesterschicht (A), die auf einer oder beiden Oberflächen der Polyesterbasisschicht (B) angeordnet ist,

wobei die Polyesterbasisschicht (B) Titandioxidpartikel in einer Menge von etwa 1 bis etwa 30 Gew.% umfasst, bezogen auf das Gesamtgewicht der Basisschicht, wobei die Partikel mit einer organischen Beschichtung beschichtet sind.

2. Mehrschichtige Karte nach Anspruch 1, wobei der Polyester der Basisschicht ausgewählt ist aus Polyethylenterephthalat (PET) und Polyethylen-2,6-naphthalat (PEN).

3. Mehrschichtige Karte nach einem der vorhergehenden Ansprüche, wobei die Polyesterbasisschicht des Weiteren einen Copolyesterether umfasst, vorzugsweise in einer Menge von etwa 0,2 bis etwa 10 Gew.%, relativ zu dem Gesamtgewicht der Polyesterbasisschicht;

wobei gegebenenfalls der Copolyesterether mindestens einen Polyesterblock und mindestens einen Polyetherblock umfasst, wobei das Verhältnis von Polyester:Polyether im Bereich von 25 bis 55: 45 bis 75 Gew.% des Copolyesterethers liegt,
und/oder wobei der Copolyesterether gegebenenfalls mindestens einen Polyesterblock eines Alkylenterephthalats umfasst, und wobei der Copolyesterether mindestens Polyetherblock umfasst, der ein Poly(alkylenoxid)glykol ausgewählt aus Poly(ethylenoxid)-glykol, Poly(propylenoxid)glykol und Poly(tetramethylenoxid)glykol ist.

4. Mehrschichtige Karte nach einem der vorhergehenden Ansprüche, wobei der Copolyester der heißsiegelbaren Schicht(en) ausgewählt ist aus Copolyestern, die von sich wiederholenden Einheiten abgeleitet sind, die aus einer ersten aromatischen Dicarbonsäure, einer zweiten aromatischen Dicarbonsäure und einem aliphatischen Glykol bestehen oder diese umfassen, und vorzugsweise Copolyestern, die von sich wiederholenden Einheiten abgeleitet sind, die aus Terephthalsäure, Isophthalsäure und Ethylenglykol bestehen, wobei vorzugsweise die Isophthalsäure in einer Menge von etwa 15 bis etwa 20 Mol.% der Säurefraktion des Copolyesters vorhanden ist.

5. Mehrschichtige Karte nach einem der vorhergehenden Ansprüche, wobei die Polyesterbasisschicht (B) biaxial orientiert ist.

6. Mehrschichtige Karte nach einem der vorhergehenden Ansprüche, wobei die mehrschichtige Folie eine coextrudierte mehrschichtige Folie ist.

7. Mehrschichtige Karte nach einem der vorhergehenden Ansprüche, wobei die mehrschichtige Folie opak ist und vorzugsweise eine optische Transmissionsdichte (TOD) von mindestens 1,0 aufweist;

und/oder wobei die mehrschichtige Folie weiß ist und vorzugsweise einen Weißindex von mindestens 95 aufweist;
und/oder wobei die mehrschichtige Folie einen L*-Wert größer als 92,00; einen a*-Wert im Bereich von -2,00 bis -0,50; und einen b*-Wert im Bereich von -4,00 bis-1,00 aufweist.

8. Mehrschichtige Karte nach einem der vorhergehenden Ansprüche, wobei das Titandioxid Rutil-Titandioxid ist; und/oder wobei die Menge an Titandioxid in der Polyesterbasisschicht im Bereich von etwa 10 bis etwa 15 Gew.% liegt, relativ zu dem Gesamtgewicht der Polyesterschicht.

9. Mehrschichtige Karte nach einem der vorhergehenden Ansprüche, wobei die organische Beschichtung kein Silan umfasst, und/oder wobei die organische Beschichtung kein Polysiloxan ist oder umfasst, und/oder wobei die organische Beschichtung kein Polyolefinharz ist oder umfasst, und/oder wobei die Titandioxidpartikel keine beschichteten Titandioxidpartikel sind, wobei die Beschichtung ein Kopplungsmittel und ein Polyolefinharz umfasst,
und/oder wobei die organische Beschichtung eine Organophosphorverbindung ist.

10. Mehrschichtige Karte nach einem der vorhergehenden Ansprüche, wobei die Titandioxidpartikel mit einer Alkylphosphonsäure oder einem Ester einer Alkylphosphonsäure beschichtet sind, wobei die Alkylphosphonsäure 6 bis 22 Kohlenstoffatome enthält,
wobei die Alkylphosphonsäure oder der Ester davon beispielsweise die Formel $P(R)(=O)(OR^1)(OR^2)$ hat, wobei:

R eine Alkylgruppe oder eine Cycloalkylgruppe ist, die 6 bis 22 Kohlenstoffatome enthält; und
$R^1$ und $R^2$ jeweils Wasserstoff, eine Alkylgruppe, eine Cycloalkylgruppe, eine Arylgruppe oder eine Aralkylgruppe sind,
wobei beispielsweise $R^1$ und $R^2$ unabhängig ausgewählt sind aus Wasserstoff und Kohlenwasserstoffgruppen, die bis zu 10 Kohlenstoffatome enthalten, und wobei vorzugsweise $R^1$ und $R^2$ Wasserstoff sind.

11. Mehrschichtige Karte nach Anspruch 10, wobei die Alkylgruppe der Alkylphosphonsäure, oder R, 6 bis 14 Kohlenstoffatome enthält und eine geradkettige Alkylgruppe ist;
und/oder wobei die Alkylphosphonsäure oder der Ester davon ausgewählt ist aus n-Octylphosphonsäure und deren Estern, n-Decylphosphonsäure und deren Estern, 2-Ethylhexylphosphonsäure und deren Estern und Camphylphosphonsäure und deren Estern.

12. Mehrschichtige Karte nach einem der Ansprüche 1 bis 9, wobei die organische Beschichtung eine polymere organische Beschichtung ist,

wobei die polymere organische Beschichtung gegebenenfalls abgeleitet ist von Monomeren, die Kohlenstoff-, Wasserstoff- und Sauerstoffatome enthalten und des Weiteren gegebenenfalls Stickstoff- und/oder Phosphor- und/oder Schwefelatome umfassen, und/oder wobei das polymere Grundgerüst der polymeren Beschichtung gegebenenfalls keine Siliciumatome enthält.

13. Mehrschichtige Karte nach Anspruch 12, wobei (i) die Titandioxidpartikel mit polymerisiertem Monomer beschichtet sind, und wobei die beschichteten Titandioxidpartikel erhältlich sind, indem Titandioxidpartikel in Wasser bei einem pH-Wert, der höher als der isoelektrische Punkt der Titandioxidpartikel ist (und vorzugsweise bei einem pH-Wert über 7 und vorzugsweise bei einem pH-Wert von 9 bis 11), in Gegenwart eines Dispergiermittels dispergiert werden, das eine polymere mehrbasische Säure oder ein Salz davon umfasst, um Partikel mit einem modifizierten isoelektrischen Punkt zu produzieren; der pH-Wert der Dispersion auf einen Wert unter 9, aber über dem modifizierten isoelektrischen Punkt der Partikel eingestellt wird; und ein oder mehrere ethylenisch ungesättigte Monomer(e) in Gegenwart der so produzierten Dispersion polymerisiert werden;

und/oder wobei (ii) die beschichteten Titandioxidpartikel eine kohärente innere Beschichtung, die aus einem Dispergiermittel gebildet ist, das eine polymere mehrbasige Säure oder ein Salz davon umfasst, und eine äußere Beschichtung umfassen, die aus der Polymerisation von einem oder mehreren ethylenisch ungesättigten Monomer(en) gebildet ist;
und/oder wobei (iii) die beschichteten Titandioxidpartikel eine polymere Beschichtung umfassen, die aus der Polymerisation von einem oder mehreren ethylenisch ungesättigten Monomer(en) gebildet ist, wobei ein Dispergiermittel, das eine polymere mehrbasige Säure oder ein Salz davon umfasst, während der Polymerisation in die polymere Beschichtung eingebaut wird;
und/oder wobei (iv) die polymeren mehrbasigen Säuren ausgewählt sind aus Polysulfonsäuren, Polyphosphonsäuren und Polycarbonsäuren, und vorzugsweise aus Polycarbonsäuren oder Salzen davon,
und/oder wobei (v) die polymeren mehrbasigen Säuren in Salzform vorliegen, und wobei die Säuren teilweise oder vollständig neutralisiert sind, und/oder die Salze die Alkalimetallsalze oder Ammoniumsalze sind, wobei gegebenenfalls die polymeren mehrbasigen Säuren ausgewählt sind aus Polysulfonsäuren ausgewählt aus Lignosulfonaten, Petroleumsulfonaten und Poly(styrolsulfonaten), einschließlich Poly(natrium-4-styrolsulfonat), oder wobei die polymeren mehrbasigen Säuren ausgewählt sind aus Polymaleinsäuren, Polyacrylsäuren, substituierten Acrylsäurepolymeren, Acrylcopolymeren, einschließlich Copolymeren einer Acrylsäure mit Sulfonsäurederivaten, einschließlich 2-Acrylamido-2-methylpropansulfonsäure;
und/oder wobei (vi) die Menge an Dispergiermittel etwa 0,05 bis etwa 5,0 Gew.%, vorzugsweise etwa 0,1 bis etwa 1,0 Gew.% beträgt, bezogen auf das Gewicht des Titandioxidpartikels;
und/oder wobei (vii) das ethylenisch ungesättigte Monomer in wässrigen Lösungsmitteln polymerisierbar ist, wobei vorzugsweise das produzierte Polymer in Wasser unlöslich ist und gegebenenfalls durch ein Vernetzungsmittel vernetzt ist;
und/oder wobei (viii) das ethylenisch ungesättigte Monomer ausgewählt ist aus aliphatischen und aromatischen Verbindungen, die eine polymerisierbare ungesättigte Gruppe enthalten, wobei die polymerisierbare ungesättigte Gruppe vorzugsweise ausgewählt ist aus ungesättigten Carbonsäuren und ungesättigten Carbonsäureestern;
und/oder wobei (ix) das ethylenisch ungesättigte Monomer ein saures Monomer ausgewählt aus Acrylsäure, Methacrylsäure, Itaconsäure, Maleinsäure oder deren Anhydrid, Fumarsäure und Crotonsäure und Estern der sauren Monomere ist, einschließlich Methylacrylat, Ethylacrylat, Methylmethacrylat, Butylacrylat und Ethylmethacrylat, und wobei vorzugsweise das ethylenisch ungesättigte Monomer ausgewählt ist aus Styrol, Vinyltoluol, alpha-Methylstyrol, Ethylen, Vinylacetat, Vinylchlorid, Acrylnitril und fluorierten Monomeren, einschließlich fluorierten Alkenen, fluorierten Ethern, fluorierten Acryl- und Methacrylsäuren und Estern davon sowie fluorierten heterocyclischen Verbindungen, und wobei vorzugsweise das ethylenisch ungesättigte Monomer ausgewählt ist aus ungesättigten Carbonsäuren und ungesättigten Carbonsäureestern, vorzugsweise aus Methylacrylat, Ethylacrylat, Butylacrylat, Butylmethacrylat, Vinylacetat und Vinylisobutylether;
und/oder wobei (x) die polymere organische Beschichtung vernetzt ist, vorzugsweise mittels Anwesenheit von einem oder mehreren Vernetzungsmitteln, wobei vorzugsweise das Vernetzungsmittel ausgewählt ist aus di- und polyfunktionellen ethylenisch ungesättigten Monomeren, vorzugsweise aus Ethylenglykoldimethacrylat, Ethylenglykoldiacrylat, Allylmethacrylat, Allylacrylat, 1,3-Butandioldiacrylat, Divinylbenzol und 1,3-Butandioldimethacrylat, wobei vorzugsweise das Vernetzungsmittel in einer Menge von etwa 1 Gew.% bis etwa 20 Gew.%, vorzugsweise etwa 1 Gew.% bis etwa 10 Gew.% vorhanden ist, bezogen auf das Gesamtgewicht des ethylenisch ungesättigten Monomers bzw. der ethylenisch ungesättigten Monomere.

**14.** Mehrschichtige Karte nach einem der vorhergehenden Ansprüche, wobei das beschichtete Titandioxid einen Wassergehalt hat, so dass es einen Verlust bei 290 °C von nicht größer als 1,0 %, vorzugsweise nicht größer als 0,5 % zeigt, gemessen mittels coulometrischer Karl-Fischer-Titration.

**15.** Mehrschichtige Karte nach einem der vorhergehenden Ansprüche, wobei das organisch beschichtete Titandioxid nicht hydrophob ist und vorzugsweise hydrophil ist;

und/oder wobei die organische Beschichtung in einer Menge von etwa 0,1 bis etwa 200 Gew.%, vorzugsweise etwa 0,1 bis etwa 100 Gew.%, von etwa 0,5 bis etwa 100 Gew.%, etwa 2,0 bis etwa 20 Gew.% vorhanden ist, bezogen auf das Gewicht des Titandioxids;
und/oder wobei das Volumenverhältnis der Titandioxidpartikel zu der organischen Beschichtung 1:1 bis 1:25 des Volumens und vorzugsweise 1:2 bis 1:8 beträgt;
und/oder wobei die Titandioxidpartikel einen volumenverteilten Medianwert des Primärpartikeldurchmessers im Bereich von 0,15 bis 0,25 μm aufweisen.

**16.** Mehrschichtige Karte nach einem der vorhergehenden Ansprüche, wobei die Dicke der Polyesterbasisschicht (B) im Bereich von 100 bis 350 μm liegt, und wobei die Dicke von der oder jeder heißsiegelbaren Copolyesterschicht im Bereich von etwa 3 bis etwa 30 μm liegt.

**17.** Mehrschichtige Karte nach einem der Ansprüche 1 bis 16, wobei die mehrschichtige Folie eine Polyesterbasisschicht (B), eine erste heißsiegelbare Copolyesterschicht (A1), die auf einer ersten Oberfläche der Polyesterbasisschicht angeordnet ist, und eine zweite heißsiegelbare Copolyesterschicht (A2), die auf einer zweiten Oberfläche der Polyesterbasisschicht angeordnet ist, umfasst.

**18.** Mehrschichtige Karte nach einem der Ansprüche 1 bis 16, wobei die mehrschichtige Folie eine Polyesterbasisschicht (B), eine heißsiegelbare Copolyesterschicht (A), die auf einer ersten Oberfläche der Polyesterbasisschicht angeordnet ist, und eine Tintenaufnahmeschicht umfasst, die auf der zweiten Oberfläche der Polyesterbasisschicht angeordnet ist, wobei die Tintenaufnahmeschicht sich von der heißsiegelbaren Copolyesterschicht (A) unterscheidet, und wobei die Tintenaufnahmeschicht ein Acrylharz umfasst;

wobei gegebenenfalls das Acrylharz mindestens ein Monomer umfasst, das von einem Ester von Acrylsäure und/oder einem Ester von Methacrylsäure abgeleitet ist, vorzugsweise einem Alkylester von Acryl- und/oder Methacrylsäure, wobei die Alkylgruppe bis zu zehn Kohlenstoffatome enthält, und wobei vorzugsweise das Acrylharz ein Alkylacrylat und ein Alkylmethacrylat umfasst, und wobei vorzugsweise das Acrylmonomer in einem Anteil im Bereich von 20 bis 80 Mol.% vorhanden ist und das Methacrylatmonomer in einem Anteil im Bereich von 20 bis 80 Mol.% vorhanden ist,
und/oder wobei gegebenenfalls die Dicke der Acrylharz enthaltenden Schicht nicht mehr als 1,5 μm beträgt.

**19.** Mehrschichtige Karte nach einem der vorhergehenden Ansprüche, wobei die mehrschichtige Folie mindestens eine und vorzugsweise alle der folgenden Eigenschaften aufweist:

(i) eine Reißfestigkeit (UTS) in jeder der Längs- und Querrichtungen der Folie von mindestens 1300 N/cm$^2$;
(ii) eine Bruchdehnung (ETB) in jeder der Längs- und Querrichtungen der Folie von mindestens 250 %;
(iii) einen F5-Wert in jeder der Längs- und Querrichtungen der Folie von mindestens 860 N/cm$^2$; und
(iv) eine Heißsiegelfestigkeit an sich selbst, wobei zwei mehrschichtige Folien, die eine PolyesterBasisschicht und eine heißsiegelbare Copolyesterschicht umfassen, miteinander heißversiegelt werden, so dass die heißsiegelbaren Schichten von jeder Folie in Kontakt miteinander sind, von mindestens 12 N/cm, vorzugsweise mindestens 13 N/cm, vorzugsweise mindestens 14 N/cm, vorzugsweise mindestens 15 N/cm.

**20.** Mehrschichtige Karte nach einem der Ansprüche 1 bis 19, des Weiteren umfassend eine zweite mehrschichtige Folie, die auf einer zweiten Oberfläche der polymeren Einlegeschicht angeordnet ist, und gegebenenfalls des Weiteren umfassend eine zweite polymere Überlagerungsschicht, die auf der zweiten mehrschichtigen Folie angeordnet ist, so dass die Schichtreihenfolge zweite polymere Überlagerungsschicht, zweite mehrschichtige Folie, polymere Einlegeschicht, erste mehrschichtige Folie und erste polymere Überlagerungsschicht ist, wobei die zweite mehrschichtige Folie eine mehrschichtige Folie wie in einem der Ansprüche 1 bis 19 definiert ist, wobei vorzugsweise die zweite mehrschichtige Folie die gleiche wie die erste mehrschichtige Folie ist, und wobei vorzugsweise die zweite polymere Überlagerungsschicht die gleiche wie die erste polymere Überlagerungsschicht ist.

21. Mehrschichtige Karte nach einem der Ansprüche 1 oder 20, wobei die oder jede mehrschichtige Folie eine einzelne heißsiegelbare Copolyesterschicht (A) umfasst und die mehrschichtige Folie in der mehrschichtigen Karte so angeordnet ist, dass ihre heißsiegelbare Copolyesterschicht (A) zu der polymeren Einlegeschicht weist.

22. Mehrschichtige Karte nach einem der Ansprüche 1 bis 21, wobei die polymere Einlegeschicht und die polymere Überlagerungsschicht unabhängig ausgewählt sind aus Polyester, Polycarbonat, Polyolefin, PVC, ABS und Papier, und vorzugsweise aus PVC;

und/oder wobei die polymere Überlagerungsschicht optisch klar ist;
und/oder wobei die mehrschichtige Karte eine Dicke im Bereich von 250 bis 850 $\mu$m hat.

23. Mehrschichtige Folie, umfassend:

(i) eine Polyesterbasisschicht (B) mit einer ersten und einer zweiten Oberfläche, wobei der Polyester der Basisschicht ein kristallisierbarer Polyester ist; und
(ii) eine heißsiegelbare Copolyesterschicht (A), die auf einer oder beiden Oberflächen der Polyesterbasisschicht (B) angeordnet ist,

wobei die Polyesterbasisschicht (B) Titandioxidpartikel in einer Menge von etwa 1 bis etwa 30 Gew.% umfasst, bezogen auf das Gesamtgewicht der Basisschicht, wobei die Partikel mit einer organischen Beschichtung beschichtet sind, wobei die organische Beschichtung eine Organophosphorverbindung ist.

24. Mehrschichtige Folie nach Anspruch 23, wobei die Titandioxidpartikel mit einer Alkylphosphonsäure oder einem Ester einer Alkylphosphonsäure beschichtet sind, wobei die Alkylphosphonsäure 6 bis 22 Kohlenstoffatome enthält, wobei die Alkylphosphonsäure oder der Ester davon beispielsweise die Formel $P(R)(=O)(OR^1)(OR^2)$ hat, wobei:

R eine Alkylgruppe oder eine Cycloalkylgruppe ist, die 6 bis 22 Kohlenstoffatome enthält; und
$R^1$ und $R^2$ jeweils Wasserstoff, eine Alkylgruppe, eine Cycloalkylgruppe, eine Arylgruppe oder eine Aralkylgruppe sind,
wobei beispielsweise $R^1$ und $R^2$ unabhängig ausgewählt sind aus Wasserstoff und Kohlenwasserstoffgruppen, die bis zu 10 Kohlenstoffatome enthalten, und wobei vorzugsweise $R^1$ und $R^2$ Wasserstoff sind.

25. Mehrschichtige Folie nach Anspruch 24, wobei die Alkylgruppe der Alkylphosphinsäure, oder R, 6 bis 14 Kohlenstoffatome enthält und eine geradkettige Alkylgruppe ist;
und/oder wobei die Alkylphosphonsäure oder der Ester davon ausgewählt ist aus n-Octylphosphonsäure und deren Estern, n-Decylphosphonsäure und deren Estern, 2-Ethylhexylphosphonsäure und deren Estern und Camphylphosphonsäure und deren Estern.

26. Mehrschichtige Folie, umfassend:

(i) eine Polyesterbasisschicht (B) mit einer ersten und einer zweiten Oberfläche, wobei der Polyester der Basisschicht ein kristallisierbarer Polyester ist; und
(ii) eine heißsiegelbare Copolyesterschicht (A), die auf einer oder beiden Oberflächen der Polyesterbasisschicht (B) angeordnet ist,

wobei die Polyesterbasisschicht (B) Titandioxidpartikel in einer Menge von etwa 1 bis etwa 30 Gew.% umfasst, bezogen auf das Gesamtgewicht der Basisschicht, wobei die Partikel mit einer organischen Beschichtung beschichtet sind, wobei die organische Beschichtung eine polymere organische Beschichtung ist, und wobei das polymere Grundgerüst der polymeren Beschichtung keine Siliciumatome enthält.

27. Mehrschichtige Folie nach Anspruch 26, wobei die Titandioxidpartikel mit polymerisiertem Monomer beschichtet sind, und wobei die beschichteten Titandioxidpartikel erhältlich sind, indem Titandioxidpartikel in Wasser bei einem pH-Wert, der höher als der isoelektrische Punkt der Titandioxidpartikel ist (und vorzugsweise bei einem pH-Wert über 7 und vorzugsweise bei einem pH-Wert von 9 bis 11) in Gegenwart eines Dispergiermittels dispergiert werden, das eine polymere mehrbasische Säure oder ein Salz davon umfasst, um Partikel mit einem modifizierten isoelektrischen Punkt zu produzieren; der pH-Wert der Dispersion auf einen Wert unter 9, aber über dem modifizierten isoelektrischen Punkt der Partikel eingestellt wird; und ein oder mehrere ethylenisch ungesättigte Monomer(en) in Gegenwart der so produzierten Dispersion polymerisiert werden;

und/oder wobei die beschichteten Titandioxidpartikel eine kohärente innere Beschichtung, die aus einem Dispergiermittel gebildet ist, das eine polymere mehrbasige Säure oder ein Salz davon umfasst, und eine äußere Beschichtung umfassen, die aus der Polymerisation von einem oder mehreren ethylenisch ungesättigten Monomer(en) gebildet ist;

und/oder wobei die beschichteten Titandioxidpartikel eine polymere Beschichtung umfassen, die aus der Polymerisation von einem oder mehreren ethylenisch ungesättigten Monomer(en) gebildet ist, wobei ein Dispergiermittel, das eine polymere mehrbasige Säure oder ein Salz davon umfasst, während der Polymerisation in die polymere Beschichtung eingebaut wird.

28. Mehrschichtige Folie nach Anspruch 27, wobei die polymeren mehrbasigen Säuren ausgewählt sind aus Polysulfonsäuren, Polyphosphonsäuren und Polycarbonsäuren, und vorzugsweise aus Polycarbonsäuren oder Salzen davon;

und/oder wobei die polymeren mehrbasigen Säuren in Salzform vorliegen, und wobei die Säuren teilweise oder vollständig neutralisiert sind, und/oder die Salze die Alkalimetallsalze oder Ammoniumsalze sind, wobei beispielsweise die polymeren mehrbasigen Säuren ausgewählt sind aus Polysulfonsäuren ausgewählt aus Lignosulfonaten, Petroleumsulfonaten und Poly(styrolsulfonaten), einschließlich Poly(natrium-4-styrolsulfonat), oder wobei die polymeren mehrbasigen Säuren ausgewählt sind aus Polymaleinsäuren, Polyacrylsäuren, substituierten Acrylsäurepolymeren, Acrylcopolymeren, einschließlich Copolymeren einer Acrylsäure mit Sulfonsäurederivaten, einschließlich 2-Acrylamido-2-methylpropansulfonsäure;

29. Mehrschichtige Folie nach einem der Ansprüche 27 bis 28, wobei die Menge an Dispergiermittel etwa 0,05 bis etwa 5,0 Gew.%, vorzugsweise etwa 0,1 bis etwa 1,0 Gew.% beträgt, bezogen auf das Gewicht des Titandioxidpartikels;

und/oder wobei das ethylenisch ungesättigte Monomer in wässrigen Lösungsmitteln polymerisierbar ist, wobei vorzugsweise das produzierte Polymer in Wasser unlöslich ist und gegebenenfalls durch ein Vernetzungsmittel vernetzt ist;
und/oder wobei das ethylenisch ungesättigte Monomer ausgewählt ist aus aliphatischen und aromatischen Verbindungen, die eine polymerisierbare ungesättigte Gruppe enthalten, wobei die polymerisierbare ungesättigte Gruppe vorzugsweise ausgewählt ist aus ungesättigten Carbonsäuren und ungesättigten Carbonsäureestern;
und/oder wobei das ethylenisch ungesättigte Monomer ein saures Monomer ausgewählt aus Acrylsäure, Methacrylsäure, Itaconsäure, Maleinsäure oder deren Anhydrid, Fumarsäure und Crotonsäure und Estern der sauren Monomere ist, einschließlich Methylacrylat, Ethylacrylat, Methylmethacrylat, Butylacrylat und Ethylmethacrylat, und wobei vorzugsweise das ethylenisch ungesättigte Monomer ausgewählt ist aus Styrol, Vinyltoluol, alpha-Methylstyrol, Ethylen, Vinylacetat, Vinylchlorid, Acrylnitril und fluorierten Monomeren, einschließlich fluorierten Alkenen, fluorierten Ethern, fluorierten Acryl- und Methacrylsäuren und Estern davon sowie fluorierten heterocyclischen Verbindungen, und wobei vorzugsweise das ethylenisch ungesättigte Monomer ausgewählt ist aus ungesättigten Carbonsäuren und ungesättigten Carbonsäureestern, vorzugsweise aus Methylacrylat, Ethylacrylat, Butylacrylat, Butylmethacrylat, Vinylacetat und Vinylisobutylether;
und/oder wobei die polymere organische Beschichtung vernetzt ist, vorzugsweise mittels Anwesenheit von einem oder mehreren Vernetzungsmitteln, wobei vorzugsweise das Vernetzungsmittel ausgewählt ist aus di- und polyfunktionellen ethylenisch ungesättigten Monomeren, vorzugsweise aus Ethylenglykoldimethacrylat, Ethylenglykoldiacrylat, Allylmethacrylat, Allylacrylat, 1,3-Butandioldiacrylat, Divinylbenzol und 1,3-Butandioldimethacrylat, wobei vorzugsweise das Vernetzungsmittel in einer Menge von etwa 1 Gew.% bis etwa 20 Gew.%, vorzugsweise etwa 1 Gew.% bis etwa 10 Gew.% vorhanden ist, bezogen auf das Gesamtgewicht des ethylenisch ungesättigten Monomers bzw. der ethylenisch ungesättigten Monomere.

**Revendications**

1. Carte multicouche comprenant une couche d'incrustation polymérique possédant une première surface et une deuxième surface, comprenant en outre un premier film multicouche qui est disposé sur la première surface de la couche d'incrustation polymérique, et comprenant en outre une première couche de recouvrement polymérique qui est disposée sur ledit premier film multicouche, de sorte que l'ordre de couches soit couche d'incrustation polymérique, premier film multicouche et première couche de recouvrement polymérique, le film multicouche comprenant :

(i) une couche de base de polyester (B) possédant une première et deuxième surfaces, le polyester de la couche de base étant un polyester cristallisable ; et
(ii) une couche de copolyester thermoscellable (A) disposée sur l'une ou les deux surfaces de ladite couche de base de polyester (B),

la couche de base de polyester (B) comprenant des particules de dioxyde de titane en une quantité allant d'environ 1 à environ 30 % en poids par poids total de la couche de base, lesdites particules étant revêtues avec un revêtement organique.

2. Carte multicouche selon la revendication 1, le polyester de la couche de base étant choisi parmi un poly(téréphtalate d'éthylène) (PET) et un poly(2,6-naphtalate d'éthylène) (PEN).

3. Carte multicouche selon une quelconque revendication précédente, la couche de base de polyester comprenant en outre un copolyesteréther, préférablement en une quantité d'environ 0,2 à environ 10 % en poids par rapport au poids total de la couche de base de polyester ;

éventuellement, le copolyesteréther comprenant au moins un bloc de polyester et au moins un bloc de polyéther, le rapport de polyester : polyéther étant dans la plage de 25 à 55 : 45 à 75 % en poids du copolyesteréther, et/ou éventuellement, le copolyesteréther comprenant au moins un bloc de polyester d'un téréphtalate alkylène, et le copolyesteréther comprenant au moins un bloc de polyéther qui est un poly(oxyde d'alkylène) glycol choisi parmi poly(oxyde d'éthylène) glycol, poly(oxyde de propylène) glycol et poly(oxyde de tétraméthylène) glycol.

4. Carte multicouche selon une quelconque revendication précédente, le copolyester de la ou des couches thermoscellables étant choisi parmi des copolyesters issus de motifs répétitifs comprenant ou constitués d'un premier acide dicarboxylique aromatique, d'un deuxième acide dicarboxylique aromatique et d'un glycol aliphatique, et préférablement des copolyesters issus de motifs répétitifs constitués d'acide téréphtalique, d'acide isophtalique et d'éthylène glycol, préférablement, l'acide isophtalique étant présent en une quantité allant d'environ 15 à environ 20 % en moles de la fraction de type acide du copolyester.

5. Carte multicouche selon une quelconque revendication précédente, la couche de base de polyester (B) étant orientée de manière biaxiale.

6. Carte multicouche selon une quelconque revendication précédente, le film multicouche étant un film multicouche coextrudé.

7. Carte multicouche selon une quelconque revendication précédente, le film multicouche étant opaque, et préférablement présentant une densité optique de transmission (TOD) d'au moins 1,0 ;

et/ou le film multicouche étant blanc, et préférablement présentant un indice de blancheur d'au moins 95 ;
et/ou le film multicouche présentant une valeur L* supérieure à 92,00 ; et une valeur a* dans la plage de -2,00 à -0,50 ; et une valeur b* dans la plage de -4,00 à -1,00.

8. Carte multicouche selon une quelconque revendication précédente, ledit dioxyde de titane étant un dioxyde de titane de type rutile ;
et/ou la quantité de dioxyde de titane dans la couche de base de polyester étant dans la plage d'environ 10 à environ 15 % en poids, par rapport au poids total de la couche de polyester.

9. Carte multicouche selon une quelconque revendication précédente, ledit revêtement organique ne comprenant pas un silane, et/ou le revêtement organique n'étant pas ou ne comprenant pas un polysiloxane, et/ou ledit revêtement organique n'étant pas ou ne comprenant pas une résine de polyoléfine, et/ou lesdites particules de dioxyde de titane n'étant pas des particules de dioxyde de titane revêtues, dans lesquelles le revêtement comprend un agent de couplage et une résine de polyoléfine,
et/ou ledit revêtement organique étant un composé organique du phosphore.

10. Carte multicouche selon une quelconque revendication précédente, les particules de dioxyde de titane étant revêtues avec un acide alkylphosphonique ou un ester d'un acide alkylphosphonique, l'acide alkylphosphonique contenant de 6 à 22 atomes de carbone,

par exemple, l'acide alkylphosphonique ou l'ester correspondant possédant la formule $P(R)(=O)(OR^1)(OR^2)$,

R étant un groupe alkyle ou un groupe cycloalkyle contenant 6 à 22 atomes de carbones ; et

R$^1$ et R$^2$ étant chacun hydrogène, un groupe alkyle, un groupe cycloalkyle, un groupe aryle ou un groupe aralkyle, par exemple, R$^1$ et R$^2$ étant indépendamment choisis parmi hydrogène et des groupes hydrocarbyle contenant jusqu'à 10 atomes de carbone, et préférablement R$^1$ et R$^2$ étant hydrogène.

11. Carte multicouche selon la revendication 10, le groupe alkyle dudit acide alkylphosphonique, ou R, contenant de 6 à 14 atomes de carbone et étant un groupe alkyle à chaîne linéaire,
et/ou l'acide alkylphosphonique ou l'ester correspondant étant choisi parmi l'acide n-octylphosphonique et ses esters, l'acide n-décylphosphonique et ses esters, l'acide 2-éthylhexylphosphonique et ses esters et l'acide camphylphosphonique et ses esters.

12. Carte multicouche selon l'une quelconque des revendications 1 à 9, ledit revêtement organique étant un revêtement organique polymérique,

éventuellement, le revêtement organique polymérique étant issu de monomères contenant des atomes de carbone, d'hydrogène et d'oxygène, et éventuellement comprenant en outre des atomes d'azote ou de phosphore et/ou de soufre,
et/ou éventuellement, le squelette polymérique dudit revêtement polymérique ne contenant pas d'atomes de silicium.

13. Carte multicouche selon la revendication 12, (i) lesdites particules de dioxyde de titane étant revêtues avec un monomère polymérisé, et lesdites particules de dioxyde de titane revêtues pouvant être obtenues en dispersant des particules de dioxyde de titane dans de l'eau à une valeur de pH supérieure au point d'isoélectrique desdites particules de dioxyde de titane (et préférablement à un pH supérieur à 7 et préférablement à un pH de 9 à 11) en la présence d'un agent dispersant comprenant un acide polybasique polymérique ou un sel correspondant pour produire des particules possédant un point isoélectrique modifié ; en ajustant le pH de la dispersion à une valeur inférieure à 9 mais supérieure au point isoélectrique modifié des particules ; et en polymérisant, en la présence de la dispersion ainsi produite, un ou plusieurs monomères éthyléniquement insaturés ;

et/ou (ii) lesdites particules de dioxyde de titane revêtues comprenant un revêtement interne cohérent formé à partir d'un agent dispersant comprenant un acide polybasique polymérique ou un sel correspondant et un revêtement externe formé par la polymérisation d'un ou plusieurs monomères éthyléniquement insaturés ; et/ou (iii) lesdites particules de dioxyde de titane revêtues comprenant un revêtement polymérique formé par la polymérisation d'un ou plusieurs monomères éthyléniquement insaturés, un agent dispersant comprenant un acide polybasique polymérique ou un sel correspondant étant incorporé dans le revêtement polymérique pendant la polymérisation ;
et/ou (iv) lesdits acides polybasiques polymériques étant choisis parmi des poly(acides sulfoniques), des poly(acides phosphoniques) et des poly(acides carboxyliques), et préférablement parmi des poly(acides carboxyliques), ou des sels correspondants,
et/ou (v) lesdits acides polybasiques polymériques étant sous forme de sel et les acides étant partiellement ou totalement neutralisés, et/ou les sels étant les sels de métal alcalin ou sels d'ammonium,
éventuellement, lesdits acides polybasiques polymériques étant choisis parmi des poly(acides sulfoniques) choisis parmi des lignosulfonates, des sulfonates de pétrole et des poly(sulfonates de styrène), y compris un poly(4-styrènesulfonate de sodium), ou lesdits acides polybasiques polymériques étant choisis parmi des poly(acides maléiques), des poly(acides acryliques), des polymères d'acide acrylique substitué, des copolymères acryliques, y compris des copolymères d'un acide acrylique avec des dérivés d'acide sulfonique, y compris l'acide 2-acrylamido-2-méthylpropanesulfonique ;
et/ou (vi) la quantité d'agent dispersant étant d'environ 0,05 à environ 5,0 % en poids, préférablement d'environ 0,1 à environ 1,0 % en poids, par poids de la particule de dioxyde de titane ;
et/ou (vii) ledit monomère éthyléniquement insaturé étant polymérisable dans des solvants aqueux, préférablement, le polymère produit étant insoluble dans l'eau et éventuellement réticulé par un agent de réticulation ;
et/ou (viii), ledit monomère éthyléniquement insaturé étant choisi parmi des composés aliphatiques et aromatiques contenant un groupe insaturé polymérisable, préférablement le groupe insaturé polymérisable étant choisi parmi des acides carboxyliques insaturés et des esters d'acides carboxyliques insaturés ;
et/ou (ix) ledit monomère éthyléniquement insaturé étant un monomère acide choisi parmi l'acide acrylique, l'acide méthacrylique, l'acide itaconique, l'acide maléique ou son anhydride, l'acide fumarique et l'acide crotonique, et des esters desdits monomères acides, y compris l'acrylate de méthyle, l'acrylate d'éthyle, le méthacrylate de méthyle, l'acrylate de butyle et le méthacrylate d'éthyle, et préférablement, ledit monomère éthyléniquement insaturé étant choisi parmi le styrène, un vinyltoluène, l'alpha-méthylstyrène, l'éthylène, l'acétate de vinyle, le chlorure de vinyle, l'acrylonitrile, et des monomères fluorés y compris des alcènes fluorés, des éthers fluorés, des acides acryliques et méthacryliques fluorés et des esters correspondants et des composés hétérocycliques fluorés, et préférablement, ledit monomère éthyléniquement insaturé étant choisi parmi des acides carboxyliques insaturés et des esters d'acides carboxyliques insaturés, préférablement l'acrylate de méthyle, l'acrylate d'éthyle, l'acrylate de butyle, le méthacrylate de butyle, l'acétate de vinyle et le vinyl-isobutyléther ; et/ou (x) ledit revêtement organique polymérique étant réticulé, préférablement grâce à la présence d'un ou plusieurs agents de réticulation, préférablement, l'agent de réticulation étant choisi parmi des monomères éthyléniquement insaturés difonctionnels et polyfonctionnels, préférablement le diméthacrylate d'éthylène glycol, le diacrylate d'éthylène glycol, le méthacrylate d'allyle, l'acrylate d'allyle, le diacrylate de 1,3-butanediol, un divinylbenzène et le diméthacrylate de 1,3-butanediol, préférablement ledit agent de réticulation étant présent en une quantité allant d'environ 1 % en poids à environ 20 % en poids, préférablement d'environ 1 % en poids à environ 10 % en poids, sur la base du poids total du ou des monomères éthyléniquement insaturés.

14. Carte multicouche selon une quelconque revendication précédente, ledit dioxyde de titane revêtu possédant une teneur en eau telle qu'il présente une perte à 290 °C non supérieure à 1,0 %, préférablement non supérieure à 0,5 %, telle que mesurée par titrage coulométrique Karl Fisher.

15. Carte multicouche selon une quelconque revendication précédente, ledit dioxyde de titane revêtu de manière organique étant non hydrophobe, et étant préférablement hydrophile ;

et/ou le revêtement organique étant présent en une quantité allant d'environ 0,1 à environ 200 % en poids, préférablement d'environ 0,1 à environ 100 % en poids, d'environ 0,5 à environ 100 % en poids, d'environ 2,0 à environ 20 % en poids, par poids du dioxyde de titane ; et/ou le rapport en volume des particules de dioxyde de titane sur le revêtement organique étant de 1 : 1 à 1 : 25 en volume, et préférablement de 1 : 2 à 1 : 8 ; et/ou lesdites particules de dioxyde de titane possédant un diamètre médian distribué en volume de particule primaire dans la plage de 0,15 à 0,25 $\mu$m.

16. Carte multicouche selon une quelconque revendication précédente, l'épaisseur de la couche de base de polyester (B) étant dans la plage de 100 à 350 $\mu$m, et l'épaisseur de la couche ou de chaque couche de polyester thermoscellable étant dans la plage allant d'environ 3 à environ 30 $\mu$m.

17. Carte multicouche selon l'une quelconque des revendications 1 à 16, le film multicouche comprenant une couche de base de polyester (B), une première couche de copolyester thermoscellable (A1) disposée sur une première surface de la couche de base de polyester et une deuxième couche de copolyester thermoscellable (A2) disposée sur une deuxième surface de la couche de base de polyester.

18. Carte multicouche selon l'une quelconque des revendications 1 à 16, le film multicouche comprenant une couche de base de polyester (B), une couche de copolyester thermoscellable (A) disposée sur une première surface de la couche de base de polyester et une couche de réception d'encre disposée sur la deuxième surface de la couche de base de polyester, ladite couche de réception d'encre étant différente de ladite couche de copolyester thermoscellable (A), et la couche de réception d'encre comprenant une résine acrylique ;

éventuellement, la résine acrylique comprenant au moins un monomère issu d'un ester d'acide acrylique et/ou d'un ester d'acide méthacrylique, préférablement un ester d'alkyle d'acide acrylique et/ou méthacrylique dans lequel le groupe alkyle contient jusqu'à dix atomes de carbone, et préférablement, la résine acrylique comprenant un acrylate d'alkyle et un méthacrylate d'alkyle, et préférablement, le monomère de type acrylate étant présent en une proportion dans la plage de 20 à 80 % en moles et le monomère de type méthacrylate étant présent en une proportion dans la plage de 20 à 80 % en moles, et/ou éventuellement, l'épaisseur de la couche contenant une résine acrylique n'étant pas supérieure à 1,5 $\mu$m.

19. Carte multicouche selon une quelconque revendication précédente, le film multicouche présentant au moins une et préférablement toutes les propriétés suivantes :

(i) une résistance à la traction ultime (UTS) dans chacune des directions longitudinale et transversale du film d'au moins 1 300 N/cm$^2$ ; (ii) une élongation à la rupture (ETB) dans chacune des directions longitudinale et transversale du film d'au moins 250 % ;

(iii) une valeur F5 dans chacune des directions longitudinale et transversale du film d'au moins 860 N/cm$^2$; et
(iv) une résistance au thermoscellage sur lui-même, où deux films multicouches comprenant une couche de base de polyester et une couche thermoscellable de copolyester sont thermoscellées ensemble de sorte que les couches thermoscellables de chaque film soient en contact l'une avec l'autre, d'au moins 12 N/cm, préférablement d'au moins 13 N/cm, préférablement d'au moins 14 N/cm, préférablement d'au moins 15 N/cm.

20. Carte multicouche selon l'une quelconque des revendications 1 à 19, comprenant en outre un deuxième film multicouche qui est disposé sur une deuxième surface de la couche d'incrustation polymérique, et éventuellement comprenant en outre une deuxième couche de recouvrement polymérique disposée sur ledit deuxième film multicouche, de sorte que l'ordre de couche soit deuxième couche de recouvrement polymérique, deuxième film multicouche, couche d'incrustation polymérique, premier film multicouche et première couche de recouvrement polymérique, ledit deuxième film multicouche étant un film multicouche tel que défini dans l'une quelconque des revendications 1 à 19, préférablement ledit deuxième film multicouche étant le même que le premier film multicouche, et préférablement, ladite deuxième couche de recouvrement polymérique étant la même que ladite première couche de recouvrement polymérique.

21. Carte multicouche selon l'une quelconque des revendications 1 à 20, le film ou chaque film multicouche comprenant une seule couche de copolyester thermoscellable (A) et ledit film multicouche étant disposé dans la carte multicouche de sorte que sa couche de copolymère thermoscellable (A) fasse face à la couche d'incrustation polymérique.

22. Carte multicouche selon l'une quelconque des revendications 1 à 21, la couche d'incrustation polymérique et la couche de recouvrement polymérique étant indépendamment choisies parmi un polyester, un polycarbonate, une polyoléfine, un PVC, un ABS et un papier, et préférablement parmi un PVC ;

et/ou ladite couche d'incrustation polymérique étant optiquement transparente ;
et/ou la carte multicouche possédant une épaisseur dans la plage de 250 à 850 μm.

23. Film multicouche comprenant :

(i) une couche de base de polyester (B) possédant une première et deuxième surfaces, le polyester de la couche de base étant un polyester cristallisable ; et
(ii) une couche de copolyester thermoscellable (A) disposée sur l'une ou les deux surfaces de ladite couche de base de polyester (B),

la couche de base de polyester (B) comprenant des particules de dioxyde de titane en une quantité allant d'environ 1 à environ 30 % en poids par poids total de la couche de base, lesdites particules étant revêtues avec un revêtement organique, ledit revêtement organique étant un composé organique du phosphore.

24. Film multicouche selon la revendication 23, les particules de dioxyde de titane étant revêtues avec un acide alkylphosphonique ou un ester d'un acide alkylphosphonique, l'acide alkylphosphonique contenant de 6 à 22 atomes de carbone,

par exemple, l'acide alkylphosphonique ou l'ester correspondant possédant la formule P(R)(=O)(OR$^1$)(OR$^2$), R étant un groupe alkyle ou un groupe cycloalkyle contenant 6 à 22 carbones ; et R$^1$ et R$^2$ étant chacun hydrogène, un groupe alkyle, un groupe cycloalkyle, un groupe aryle ou un groupe aralkyle, par exemple, R$^1$ et R$^2$ étant indépendamment choisis parmi hydrogène et des groupes hydrocarbyle contenant jusqu'à 10 atomes de carbone, et préférablement R$^1$ et R$^2$ étant hydrogène.

25. Film multicouche selon la revendication 24, le groupe alkyle dudit acide alkylphosphinique, ou R, contenant de 6 à 14 atomes de carbone et étant un groupe alkyle à chaîne linéaire, et/ou l'acide alkylphosphonique ou l'ester correspondant étant choisi parmi l'acide n-octylphosphonique et ses esters, l'acide n-décylphosphonique et ses esters, l'acide 2-éthylhexylphosphonique et ses esters et l'acide camphylphosphonique et ses esters.

26. Film multicouche comprenant :

(i) une couche de base de polyester (B) possédant une première et deuxième surfaces, le polyester de la couche de base étant un polyester cristallisable ; et

(ii) une couche de copolyester thermoscellable (A) disposée sur l'une ou les deux surfaces de ladite couche de base de polyester (B),

la couche de base de polyester (B) comprenant des particules de dioxyde de titane en une quantité allant d'environ 1 à environ 30 % en poids par poids total de la couche de base, lesdites particules étant revêtues avec un revêtement organique, ledit revêtement organique étant un revêtement organique polymérique et le squelette polymérique dudit revêtement polymérique ne contenant pas d'atomes de silicium.

27. Film multicouche selon la revendication 26, lesdites particules de dioxyde de titane étant revêtues avec un monomère polymérisé, et lesdites particules de dioxyde de titane revêtues pouvant être obtenues en dispersant des particules de dioxyde de titane dans de l'eau à une valeur de pH supérieure au point d'isoélectrique desdites particules de dioxyde de titane (et préférablement à un pH supérieur à 7 et préférablement à un pH de 9 à 11) en la présence d'un agent dispersant comprenant un acide polybasique polymérique ou un sel correspondant pour produire des particules possédant un point isoélectrique modifié ; en ajustant le pH de la dispersion à une valeur inférieure à 9 mais supérieure au point isoélectrique modifié des particules ; et en polymérisant, en la présence de la dispersion ainsi produite, un ou plusieurs monomères éthyléniquement insaturés ;

et/ou lesdites particules de dioxyde de titane revêtues comprenant un revêtement interne cohérent formé à partir d'un agent dispersant comprenant un acide polybasique polymérique ou un sel correspondant et un revêtement externe formé par la polymérisation d'un ou plusieurs monomères éthyléniquement insaturés ; et/ou lesdites particules de dioxyde de titane revêtues comprenant un revêtement polymérique formé par la polymérisation d'un ou plusieurs monomères éthyléniquement insaturés, un agent dispersant comprenant un acide polybasique polymérique ou un sel correspondant étant incorporé dans le revêtement polymérique pendant la polymérisation.

28. Film multicouche selon la revendication 27, lesdits acides polybasiques polymériques étant choisis parmi des poly(acides sulfoniques), des poly(acides phosphoniques) et des poly(acides carboxyliques), et préférablement parmi des poly(acides carboxyliques), ou des sels correspondants,

et/ou lesdits acides polybasiques polymériques étant sous forme de sel et les acides étant partiellement ou totalement neutralisés, et/ou les sels étant les sels de métal alcalin ou sels d'ammonium, par exemple, lesdits acides polybasiques polymériques étant choisis parmi des poly(acides sulfoniques) choisis parmi des lignosulfonates, des sulfonates de pétrole et des poly(sulfonates de styrène), y compris un poly(4-styrènesulfonate de sodium), ou lesdits acides polybasiques polymériques étant choisis parmi des poly(acides maléiques), des poly(acides acryliques), des polymères d'acide acrylique substitué, des copolymères acryliques, y compris des copolymères d'un acide acrylique avec des dérivés d'acide sulfonique, y compris l'acide 2-acrylamido-2-méthylpropanesulfonique.

29. Film multicouche selon l'une quelconque des revendications 27 à 28, la quantité d'agent dispersant étant d'environ 0,05 à environ 5,0 % en poids, préférablement d'environ 0,1 à environ 1,0 % en poids, par poids de la particule de dioxyde de titane ;

et/ou ledit monomère éthyléniquement insaturé étant polymérisable dans des solvants aqueux, préférablement, le polymère produit étant insoluble dans l'eau et éventuellement réticulé par un agent de réticulation ; et/ou ledit monomère éthyléniquement insaturé étant choisi parmi des composés aliphatiques et aromatiques contenant un groupe insaturé polymérisable, préférablement le groupe insaturé polymérisable étant choisi parmi des acides carboxyliques insaturés et des esters d'acides carboxyliques insaturés ; et/ou ledit monomère éthyléniquement insaturé étant un monomère acide choisi parmi l'acide acrylique, l'acide méthacrylique, l'acide itaconique, l'acide maléique ou son anhydride, l'acide fumarique et l'acide crotonique, et des esters desdits monomères acides, y compris l'acrylate de méthyle, l'acrylate d'éthyle, le méthacrylate de méthyle, l'acrylate de butyle et le méthacrylate d'éthyle, et préférablement, ledit monomère éthyléniquement insaturé étant choisi parmi le styrène, un vinyltoluène, l'alpha-méthylstyrène, l'éthylène, l'acétate de vinyle, le chlorure de vinyle, l'acrylonitrile, et des monomères fluorés y compris des alcènes fluorés, des éthers fluorés, des acides acryliques et méthacryliques fluorés et des esters correspondants et des composés hétérocycliques fluorés, et préférablement, ledit monomère éthyléniquement insaturé étant choisi parmi des acides carboxyliques insaturés et des esters d'acides carboxyliques insaturés, préférablement l'acrylate de méthyle, l'acrylate d'éthyle, l'acrylate de butyle, le méthacrylate de butyle, l'acétate de vinyle et le vinyl-isobutyléther ; et/ou ledit revêtement organique polymérique étant réticulé, préférablement grâce à la présence d'un ou plusieurs agents de réticulation, préférablement, l'agent de réticulation étant choisi parmi des monomères éthyléniquement insaturés difonctionnels et polyfonctionnels, préférablement le diméthacrylate d'éthylène glycol, le diacrylate d'éthylène glycol, le méthacrylate d'allyle, l'acrylate d'allyle, le diacrylate de 1,3-butanediol, un divinylbenzène et le diméthacrylate de 1,3-butanediol, préférablement ledit agent de réticulation étant présent en une quantité allant d'environ 1 % en poids à environ 20 % en poids, préférablement d'environ 1 % en poids à environ 10 % en poids, sur la base du poids total du ou des monomères éthyléniquement insaturés.

# FIG. 1

# FIG. 2

# FIG. 3

# FIG. 4

## FIG. 5

## FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7785680 B
- US 7232602 B
- EP 0707051 A
- EP 0572128 A
- US 7232802 B